# EUROPEAN PATENT APPLICATION

(11) **EP 4 567 701 A1**
(43) Date of publication of application: **11.06.2025**
(21) Application number: 22956059.4
(22) Date of filing: 25.08.2022
(51) Int. Cl.: G06Q 20/06

(54) **BLOCKCHAIN CREATION METHOD AND RELATED APPARATUS**

(71) Applicant: Huawei Technologies Co., Ltd., Shenzhen, Guangdong 518129 (CN)
(72) Inventor: WANG, Donghui, Shenzhen, Guangdong 518129 (CN); LIU, Fei, Shenzhen, Guangdong 518129 (CN)
(74) Representative: Pfenning, Meinig & Partner mbB
(86) International application number: PCT/CN2022/114801
(87) International publication number: WO 2024/040512

(57) **Abstract**

This application provides a blockchain creation method and a related apparatus. The method includes: sending a first message to at least one first node, where the first message is for configuring the first node to be a blockchain node; and receiving a first indication message from the at least one first node, where the first indication message indicates whether the first node is successfully configured. A type of the first node includes at least one of the following: a terminal device, an access network device, a core network element, an independent node, an application function node, and an edge network node. Based on the solutions in embodiments of this application, a communication network can be combined with a blockchain technology, to facilitate creation and management of a blockchain.

## Description

### TECHNICAL FIELD

This application relates to the field of communication technologies, and in particular, to a blockchain creation method and a related apparatus.

### BACKGROUND

A blockchain is a distributed ledger integrating a plurality of technologies such as a cryptography technology, a peer-to-peer (peer-to-peer, P2P) network, and a distributed database. As an open and transparent decentralization technology, the blockchain transforms a conventional authority center and central trust into a group consensus and decentralized trust, and constructs the tamper-proof distributed ledger that is guaranteed by using the cryptography technology. However, evolution of a current blockchain is independent of network evolution. That is, the current blockchain as an independent distributed storage bypasses a communication network, and cannot be combined with the communication network. In addition, the communication network cannot directly create and manage the blockchain either.

### SUMMARY

This application provides a blockchain creation method and a related apparatus, to combine a blockchain with a communication network, so that the communication network directly manages the blockchain.

According to a first aspect, this application provides a blockchain creation method. The method includes:
sending a first message to at least one first node, where the first message is for configuring the first node to be a blockchain node, a type of the first node includes at least one of the following: a terminal device, an access network device, a core network element, an independent node, an application function node, and an edge network node, and the terminal device, the access network device, the core network element, the independent node, the application function node, and the edge network node are nodes having a blockchain capability in a communication network; and
receiving a first indication message from the at least one first node, where the first indication message indicates whether the first node is successfully configured.

In this application, a LAF may send the first message to the first node to configure the first node to be the blockchain node. The LAF may be a new NF in a CN, or the LAF may be deployed in a RAN. The type of the first node may be one or more of the terminal device, the access network device, the core network element, the independent node, the application function node, the edge network node, and the like. Therefore, through implementation of the solution in this application, a blockchain can be combined with the communication network, so that the communication network directly manages the blockchain.

In a possible implementation, the method further includes:
receiving blockchain establishment requirement information from a second node; and
the sending a first message to at least one first node includes:
   sending the first message to the at least one first node based on the blockchain establishment requirement information.

In this implementation, another node (for example, the second node) having a blockchain establishment requirement may send the blockchain establishment requirement information to the LAF, to create or manage the blockchain by using the LAF.

In a possible implementation, the blockchain establishment requirement information includes one or more of the following requirements:
a blockchain structure, a block structure, a consensus mechanism, a throughput requirement, whether a blockchain supports an editing function, an access control policy for the blockchain, a quantity of first nodes, policy information, identification information of the first node, a capability of the first node, the type of the first node, a mode supported by the first node, configuration information corresponding to the first node, and whether the first node is capable of providing a trusted execution environment for running of the blockchain.

In a possible implementation, the blockchain establishment requirement information includes the policy information; and
the sending the first message to the at least one first node based on the blockchain establishment requirement information includes:
obtaining identification information of a network element in which the first node is located, address information of the first node, or identification information of the first node based on the policy information; and
sending the first message to the at least one first node based on the identification information of the network element in which the first node is located, the address information of the first node, or the identification information of the first node.

In this implementation, a requirementer (for example, the second node) of the blockchain creation does not need to obtain details of an infrastructure of an underlying blockchain, but directly releases a chain establishment node policy to the LAF. The LAF automatically identifies an underlying node satisfying the policy, to construct the blockchain. It is simpler and easier to use for the second node. In addition, because the underlying details are shielded from the second node, network privacy and security are improved.

In a possible implementation, the obtaining identification information of a network element in which the first node is located, address information of the first node, or identification information of the first node based on the policy information includes:
sending a first query request to a fourth node, where the first query request includes the policy information; and
receiving a first response message from the fourth node, where the first response message includes the identification information of the network element in which the first node is located, the address information of the first node, or the identification information of the first node.

In this implementation, after interworking with the fourth node (for example, a UDM or a PCF), the LAF obtains the related information of the node. This can be compatible with an existing communication network, and has higher applicability.

In a possible implementation, the blockchain establishment requirement information includes the identification information of the first node; and
the sending the first message to the at least one first node based on the blockchain establishment requirement information includes:
sending the first message to the at least one first node based on the identification information of the first node.

In this implementation, the blockchain establishment requirement information directly includes an identifier of the first node, so that the requirement is clearer. The LAF may directly deliver the first message to the first node without performing excessive processing. This helps improve blockchain creation or management efficiency.

In a possible implementation, the sending the first message to the at least one first node based on the identification information of the first node includes:
obtaining the identification information of the network element in which the first node is located or the address information of the first node based on the identification information of the first node; and
sending the first message to the at least one first node based on the identification information of the network element in which the first node is located or the address information of the first node.

In this implementation, an access function and a blockchain management function (namely, the LAF) of the first node in the network are separated because the access function may not only be provided for the LAF to use, but also be provided for another network element to use. Therefore, function boundaries between network elements are clearer. In addition, compatibility corresponding to a case in which the solution is applied to a 5G system is further improved.

In a possible implementation, the obtaining the identification information of the network element in which the first node is located or the address information of the first node based on the identification information of the first node includes:
sending a second query request to a fifth node, where the second query request includes the identification information of the first node; and
receiving a second response message from the fifth node, where the second response message includes the identification information of the network element in which the first node is located or the address information of the first node.

In this implementation, an information management function and the blockchain management function (namely, the LAF) of the first node in the network are separated because the information management function may not only be provided for the LAF to use, but also be provided for the another network element to use. Therefore, the function boundaries between the network elements are clearer. In addition, compatibility corresponding to a case in which the solution is applied to the 5G system is further improved.

In a possible implementation, the network element in which the first node is located is an access and mobility management function AMF.

In a possible implementation, the type of the first node is the terminal device; and the first response message includes the identification information of the first node, or the second response message includes the identification information of the network element in which the first node is located or the address information of the first node; and
the fourth node is a policy control function PCF, or the fifth node is a unified data management UDM.

In this implementation, compatibility corresponding to a case in which the solution is applied to the 5G system is improved.

In a possible implementation, the first response message includes the identification information of the network element in which the first node is located or the address information of the first node, and the second response message includes the identification information of the network element in which the first node is located or the address information of the first node; and
the type of the first node is the access network device, and the fourth node or the fifth node is an operations, administration and maintenance OAM;
the type of the first node is the core network element, and the fourth node or the fifth node is a network repository function NRF; or
the type of the first node is the application function node, and the fourth node or the fifth node is a network exposure function NEF.

In this implementation, compatibility corresponding to a case in which the solution is applied to the 5G system is improved.

In a possible implementation, the method further includes:
sending a blockchain establishment result to the second node based on the first indication message from the at least one first node.

In this implementation, the LAF may obtain a configuration status of the first node in real time. This helps manage a blockchain status, and can improve efficiency of responding to the requirementer of the blockchain creation.

In a possible implementation, the sending a blockchain establishment result to the second node based on the first indication message from the at least one first node includes:
sending the blockchain establishment result and a blockchain establishment log to the second node based on the first indication message from the at least one first node, where
the blockchain establishment log includes a requirement completion status.

In this implementation, the blockchain establishment log displays details of the configuration status of the blockchain node. This helps manage the node and obtain more detailed information to provide the more detailed information for the requirementer of the blockchain creation.

In a possible implementation, the first indication message includes configuration success information or configuration failure information, and the blockchain establishment result includes a blockchain establishment success or a blockchain establishment failure; and
the sending a blockchain establishment result to the second node based on the first indication message from the at least one first node includes:
sending the blockchain establishment result to the second node based on an amount of configuration success information included in the first indication message from the at least one first node.

In a possible implementation, if the amount of configuration success information is greater than or equal to a first quantity threshold, the blockchain establishment result is the blockchain establishment success; or
if the amount of configuration success information is less than a first quantity threshold, the blockchain establishment result is the blockchain establishment failure.

In a possible implementation, the method further includes:
if the amount of configuration success information is less than the first quantity threshold, reselecting a node satisfying a blockchain establishment requirement, and configuring the node to be the blockchain node.

In a possible implementation, the method further includes:
receiving blockchain capability information of a plurality of nodes, where the plurality of nodes include the at least one first node.

In this implementation, the blockchain capability information of the nodes is received, which helps subsequently identify accurately the node satisfying the blockchain establishment requirement.

In a possible implementation, the method further includes:
storing the blockchain capability information of the plurality of nodes; or
sending the blockchain capability information of the plurality of nodes to a sixth node.

In this implementation, the sixth node may be a UDM, or the sixth node may be a newly designed network element, for example, a UTDM. This is not limited herein. When the sixth node is the UDM, compatibility of the solution in this application with the 5G system can be improved. When the sixth node is the UDM, applicability of the solution in this application can be improved.

In a possible implementation, the blockchain capability information includes a mode supported by the node, and the mode includes one or more of the following:
a client mode, a micronode mode, a light-node mode, and a full-node mode, where
a node in the client mode is configured to generate a transaction or a transaction proposal;
a node in the micronode mode is configured to preprocess the transaction or the transaction proposal, where the preprocessing the transaction or the transaction proposal includes one or more of the following: verifying the transaction or the transaction proposal; executing the transaction proposal to generate the transaction; and generating a microblock based on the transaction;
a node in the light-node mode is configured to process the transaction, the transaction proposal, or the microblock, and the processing the transaction, the transaction proposal, or the microblock includes one or more of the following: verifying the transaction or the transaction proposal; executing the transaction proposal to generate the transaction; and reaching a consensus on the transaction or the microblock, and generating a complete block based on the transaction or the microblock; and
a node in the full-node mode includes a function of the node in the light-node mode, and is configured to store the complete block.

In this implementation, different modes are defined to better adapt to a case in which there are many types of underlying devices and a capability difference is large in the telecommunications network, to help improve applicability of the solution. There are various combination manners. For example, the terminal device serves as a client, the access network device serves as a micronode, and the core network element and the independent node serve as full nodes. For another example, a terminal device 1 serves as a client, a terminal device 2 serves as a micronode, and the access network device and the independent node serve as full nodes. For another example, the terminal device serves as a client, the application function node serves as a micronode, and the core network element and the independent node serve as full nodes.

In a possible implementation, the node in the client mode and the node in the micronode mode include at least one of the following capabilities: a smart-contract deployment, invoking, or execution capability, a transaction reporting, querying, or execution capability, a block querying capability, a computing capability, a storage capability, a network capability, a security algorithm capability, and a trusted-execution-environment provision capability; and
the node in the light-node mode and the node in the full-node mode include at least one of the following capabilities: the smart-contract deployment, invoking, or execution capability, the transaction reporting, querying, or execution capability, the block querying capability, the computing capability, the storage capability, the network capability, the security algorithm capability, the trusted-execution-environment provision capability, and a consensus capability.

In a possible implementation, the blockchain capability information includes at least one of the following capabilities:
a smart-contract deployment, invoking, or execution capability, a transaction reporting, querying, or execution capability, a block querying capability, a computing capability, a storage capability, a network capability, a security algorithm capability, a trusted-execution-environment provision capability, and a consensus capability.

In a possible implementation, the method further includes:
sending a second message to a third node, where the third node is a successfully configured node in the at least one first node, and the second message is for canceling the third node serving as the blockchain node; and
receiving a second indication message from the third node, where the second indication message indicates whether the third node is successfully canceled.

According to a second aspect, this application provides a blockchain creation method. The method includes:
A first node receives a first message, where the first message is for configuring the first node to be a blockchain node, a type of the first node includes at least one of the following: a terminal device, an access network device, a core network element, an independent node, an application function node, and an edge network node, and the terminal device, the access network device, the core network element, the independent node, the application function node, and the edge network node are nodes having a blockchain capability in a communication network.

The first node sends a first indication message, where the first indication message indicates whether the first node is successfully configured.

In a possible implementation, the method further includes:
The first node sends blockchain capability information.

In a possible implementation, the blockchain capability information includes a mode supported by the node, and the mode includes one or more of the following:
a client mode, a micronode mode, a light-node mode, and a full-node mode, where
a node in the client mode is configured to generate a transaction or a transaction proposal;
a node in the micronode mode is configured to preprocess the transaction or the transaction proposal, where the preprocessing the transaction or the transaction proposal includes one or more of the following: verifying the transaction or the transaction proposal; executing the transaction proposal to generate the transaction; and generating a microblock based on the transaction;
a node in the light-node mode is configured to process the transaction, the transaction proposal, or the microblock, and the processing the transaction, the transaction proposal, or the microblock includes one or more of the following: verifying the transaction or the transaction proposal; executing the transaction proposal to generate the transaction; and reaching a consensus on the transaction or the microblock, and generating a complete block based on the transaction or the microblock; and
a node in the full-node mode includes a function of the node in the light-node mode, and is configured to store the complete block.

In a possible implementation, the node in the client mode and the node in the micronode mode include at least one of the following capabilities: a smart-contract deployment, invoking, or execution capability, a transaction reporting, querying, or execution capability, a block querying capability, a computing capability, a storage capability, a network capability, a security algorithm capability, and a trusted-execution-environment provision capability; and
the node in the light-node mode and the node in the full-node mode include at least one of the following capabilities: the smart-contract deployment, invoking, or execution capability, the transaction reporting, querying, or execution capability, the block querying capability, the computing capability, the storage capability, the network capability, the security algorithm capability, the trusted-execution-environment provision capability, and a consensus capability.

In a possible implementation, the blockchain capability information includes at least one of the following capabilities:
a smart-contract deployment, invoking, or execution capability, a transaction reporting, querying, or execution capability, a block querying capability, a computing capability, a storage capability, a network capability, a security algorithm capability, a trusted-execution-environment provision capability, and a consensus capability.

In a possible implementation, the first indication message indicates that the first node is successfully configured; and
the method further includes:
receiving a second message, where the second message is for canceling the first node serving as the blockchain node; and
sending a second indication message, where the second indication message indicates whether the first node is successfully canceled.

According to a third aspect, this application provides a blockchain creation method. The method includes:
A second node determines blockchain establishment requirement information.

The second node sends the blockchain establishment requirement information.

The second node herein is a node having a blockchain establishment requirement.

In a possible implementation, the blockchain establishment requirement information includes one or more of the following requirements:
a blockchain structure, a block structure, a consensus mechanism, a throughput requirement, whether a blockchain supports an editing function, an access control policy for the blockchain, a quantity of first nodes, policy information, identification information of the first node, a capability of the first node, a type of the first node, a mode supported by the first node, configuration information corresponding to the first node, and whether the first node is capable of providing a trusted execution environment for running of the blockchain.

In a possible implementation, the type of the first node includes at least one of the following:
a terminal device, an access network device, a core network element, an independent node, an application function node, and an edge network node, where
the terminal device, the access network device, the core network element, the independent node, the application function node, and the edge network node are nodes having a blockchain capability in a communication network.

In a possible implementation, the mode includes one or more of the following:
a client mode, a micronode mode, a light-node mode, and a full-node mode, where
a node in the client mode is configured to generate a transaction or a transaction proposal;
a node in the micronode mode is configured to preprocess the transaction or the transaction proposal, where the preprocessing the transaction or the transaction proposal includes one or more of the following: verifying the transaction or the transaction proposal; executing the transaction proposal to generate the transaction; and generating a microblock based on the transaction;
a node in the light-node mode is configured to process the transaction, the transaction proposal, or the microblock, and the processing the transaction, the transaction proposal, or the microblock includes one or more of the following: verifying the transaction or the transaction proposal; executing the transaction proposal to generate the transaction; and reaching a consensus on the transaction or the microblock, and generating a complete block based on the transaction or the microblock; and
a node in the full-node mode includes a function of the node in the light-node mode, and is configured to store the complete block.

In a possible implementation, the node in the client mode and the node in the micronode mode include at least one of the following capabilities: a smart-contract deployment, invoking, or execution capability, a transaction reporting, querying, or execution capability, a block querying capability, a computing capability, a storage capability, a network capability, a security algorithm capability, and a trusted-execution-environment provision capability; and
the node in the light-node mode and the node in the full-node mode include at least one of the following capabilities: the smart-contract deployment, invoking, or execution capability, the transaction reporting, querying, or execution capability, the block querying capability, the computing capability, the storage capability, the network capability, the security algorithm capability, the trusted-execution-environment provision capability, and a consensus capability.

In a possible implementation, the method further includes:
The second node receives a blockchain establishment result; or
the second node receives a blockchain establishment result and a blockchain establishment log, where the blockchain establishment log includes a requirement completion status.

In a possible implementation, the blockchain establishment result includes a blockchain establishment success or a blockchain establishment failure.

According to a fourth aspect, this application provides a blockchain creation method. The method includes:
A fourth node receives a first query request, where the first query request includes policy information, or the first query request includes identification information of a first node.

The fourth node sends a first response message, where when the first query request includes the policy information, the first response message includes identification information of a network element in which the first node is located, address information of the first node, or the identification information of the first node; or when the first query request includes the identification information of the first node, the first response message includes identification information of a network element in which the first node is located or address information of the first node.

A type of the first node includes at least one of the following: a terminal device, an access network device, a core network element, an independent node, an application function node, and an edge network node, and the terminal device, the access network device, the core network element, the independent node, the application function node, and the edge network node are nodes having a blockchain capability in a communication network.

In a possible implementation, the network element in which the first node is located is an access and mobility management function AMF.

In a possible implementation, the type of the first node is the terminal device, the first query request includes the policy information, the first response message includes the identification information of the first node, and the fourth node is a policy control function PCF.

In a possible implementation, the type of the first node is the terminal device, the first query request includes the identification information of the first node, the first response message includes the identification information of the network element in which the first node is located or the address information of the first node, and the fourth node is a unified data management UDM.

In a possible implementation, the first response message includes the identification information of the network element in which the first node is located or the address information of the first node; and
the type of the first node is the access network device, and the fourth node is an operations, administration and maintenance OAM;
the type of the first node is the core network element, and the fourth node is a network repository function NRF; or
the type of the first node is the application function node, and the fourth node is a network exposure function NEF.

In a possible implementation, the method further includes:
The fourth node receives blockchain capability information of a plurality of nodes, where the plurality of nodes include at least one first node, the type of the first node includes at least one of the following: the terminal device, the access network device, the core network element, the independent node, the application function node, and the edge network node, and the terminal device, the access network device, the core network element, the independent node, the application function node, and the edge network node are the nodes having a blockchain capability in the communication network.

The fourth node stores the blockchain capability information of the plurality of nodes, where the blockchain capability information is for a ledger anchor function to determine the at least one first node.

According to a fifth aspect, this application provides a communication apparatus. The apparatus is a ledger anchor function LAF, and the apparatus includes:
a transceiver unit, configured to send a first message to at least one first node, where the first message is for configuring the first node to be a blockchain node, a type of the first node includes at least one of the following: a terminal device, an access network device, a core network element, an independent node, an application function node, and an edge network node, and the terminal device, the access network device, the core network element, the independent node, the application function node, and the edge network node are nodes having a blockchain capability in a communication network, where
the transceiver unit is configured to receive a first indication message from the at least one first node, where the first indication message indicates whether the first node is successfully configured.

In a possible implementation, the transceiver unit is further configured to receive blockchain establishment requirement information from a second node; and
the apparatus further includes a processing unit, where
when the first message is sent to the at least one first node, the processing unit is further configured to:
   send the first message to the at least one first node based on the blockchain establishment requirement information by using the transceiver unit.

In a possible implementation, the blockchain establishment requirement information includes one or more of the following requirements:
a blockchain structure, a block structure, a consensus mechanism, a throughput requirement, whether a blockchain supports an editing function, an access control policy for the blockchain, a quantity of first nodes, policy information, identification information of the first node, a capability of the first node, the type of the first node, a mode supported by the first node, configuration information corresponding to the first node, and whether the first node is capable of providing a trusted execution environment for running of the blockchain.

In a possible implementation, the blockchain establishment requirement information includes the policy information; and the apparatus further includes the processing unit, where
when the first message is sent to the at least one first node based on the blockchain establishment requirement information, the processing unit is configured to:
obtain identification information of a network element in which the first node is located, address information of the first node, or identification information of the first node based on the policy information; and
send the first message to the at least one first node based on the identification information of the network element in which the first node is located, the address information of the first node, or the identification information of the first node by using the transceiver unit.

In a possible implementation, when obtaining the identification information of the network element in which the first node is located, the address information of the first node, or the identification information of the first node based on the policy information, the processing unit is configured to:
send a first query request to a fourth node by using the transceiver unit, where the first query request includes the policy information; and
receive a first response message from the fourth node by using the transceiver unit, where the first response message includes the identification information of the network element in which the first node is located, the address information of the first node, or the identification information of the first node.

In a possible implementation, the blockchain establishment requirement information includes the identification information of the first node; and the apparatus further includes the processing unit, where
when the first message is sent to the at least one first node based on the blockchain establishment requirement information, the processing unit is configured to:
send the first message to the at least one first node based on the identification information of the first node by using the transceiver unit.

In a possible implementation, when the first message is sent to the at least one first node based on the identification information of the first node, the processing unit is configured to:
obtain the identification information of the network element in which the first node is located or the address information of the first node based on the identification information of the first node; and
send the first message to the at least one first node based on the identification information of the network element in which the first node is located or the address information of the first node by using the transceiver unit.

In a possible implementation, when obtaining the identification information of the network element in which the first node is located or the address information of the first node based on the identification information of the first node, the processing unit is configured to:
send a second query request to a fifth node by using the transceiver unit, where the second query request includes the identification information of the first node; and
receive a second response message from the fifth node by using the transceiver unit, where the second response message includes the identification information of the network element in which the first node is located or the address information of the first node.

In a possible implementation, the network element in which the first node is located is an access and mobility management function AMF.

In a possible implementation, the type of the first node is the terminal device; and the first response message includes the identification information of the first node, or the second response message includes the identification information of the network element in which the first node is located or the address information of the first node; and
the fourth node is a policy control function PCF, or the fifth node is a unified data management UDM.

In a possible implementation, the first response message includes the identification information of the network element in which the first node is located or the address information of the first node, and the second response message includes the identification information of the network element in which the first node is located or the address information of the first node; and
the type of the first node is the access network device, and the fourth node or the fifth node is an operations, administration and maintenance OAM;
the type of the first node is the core network element, and the fourth node or the fifth node is a network repository function NRF; or
the type of the first node is the application function node, and the fourth node or the fifth node is a network exposure function NEF.

In a possible implementation, the processing unit is further configured to:
send a blockchain establishment result to the second node based on the first indication message from the at least one first node by using the transceiver unit.

In a possible implementation, when the blockchain establishment result is sent to the second node based on the first indication message from the at least one first node, the processing unit is further configured to:
send the blockchain establishment result and a blockchain establishment log to the second node based on the first indication message from the at least one first node by using the transceiver unit, where
the blockchain establishment log includes a requirement completion status.

In a possible implementation, the first indication message includes configuration success information or configuration failure information, and the blockchain establishment result includes a blockchain establishment success or a blockchain establishment failure; and
when the blockchain establishment result is sent to the second node based on the first indication message from the at least one first node, the processing unit is configured to:
send, by using the transceiver unit, the blockchain establishment result to the second node based on an amount of configuration success information included in the first indication message from the at least one first node.

In a possible implementation, if the amount of configuration success information is greater than or equal to a first quantity threshold, the blockchain establishment result is the blockchain establishment success; or
if the amount of configuration success information is less than a first quantity threshold, the blockchain establishment result is the blockchain establishment failure.

In a possible implementation, the processing unit is further configured to:
if the amount of configuration success information is less than the first quantity threshold, reselect a node satisfying a blockchain establishment requirement, and configuring the node to be the blockchain node.

In a possible implementation, the transceiver unit is further configured to:
receive blockchain capability information of a plurality of nodes, where the plurality of nodes include the at least one first node.

In a possible implementation, the apparatus further includes a storage unit.

After the blockchain capability information of the plurality of nodes is received, the storage unit or the transceiver unit is configured to:
the storage unit is configured to store the blockchain capability information of the plurality of nodes; or
the transceiver unit is configured to send the blockchain capability information of the plurality of nodes to a sixth node.

In a possible implementation, the blockchain capability information includes a mode supported by the node, and the mode includes one or more of the following:
a client mode, a micronode mode, a light-node mode, and a full-node mode, where
a node in the client mode is configured to generate a transaction or a transaction proposal;
a node in the micronode mode is configured to preprocess the transaction or the transaction proposal, where the preprocessing the transaction or the transaction proposal includes one or more of the following: verifying the transaction or the transaction proposal; executing the transaction proposal to generate the transaction; and generating a microblock based on the transaction;
a node in the light-node mode is configured to process the transaction, the transaction proposal, or the microblock, and the processing the transaction, the transaction proposal, or the microblock includes one or more of the following: verifying the transaction or the transaction proposal; executing the transaction proposal to generate the transaction; and reaching a consensus on the transaction or the microblock, and generating a complete block based on the transaction or the microblock; and
a node in the full-node mode includes a function of the node in the light-node mode, and is configured to store the complete block.

In a possible implementation, the node in the client mode and the node in the micronode mode include at least one of the following capabilities: a smart-contract deployment, invoking, or execution capability, a transaction reporting, querying, or execution capability, a block querying capability, a computing capability, a storage capability, a network capability, a security algorithm capability, and a trusted-execution-environment provision capability; and
the node in the light-node mode and the node in the full-node mode include at least one of the following capabilities: the smart-contract deployment, invoking, or execution capability, the transaction reporting, querying, or execution capability, the block querying capability, the computing capability, the storage capability, the network capability, the security algorithm capability, the trusted-execution-environment provision capability, and a consensus capability.

In a possible implementation, the blockchain capability information includes at least one of the following capabilities:
a smart-contract deployment, invoking, or execution capability, a transaction reporting, querying, or execution capability, a block querying capability, a computing capability, a storage capability, a network capability, a security algorithm capability, a trusted-execution-environment provision capability, and a consensus capability.

In a possible implementation, the transceiver unit is further configured to:
send a second message to a third node, where the third node is a successfully configured node in the at least one first node, and the second message is for canceling the third node serving as the blockchain node; and
receive a second indication message from the third node, where the second indication message indicates whether the third node is successfully canceled.

According to a sixth aspect, this application provides a communication apparatus. The apparatus is a first node, and the apparatus includes:
a transceiver unit, configured to receive a first message, where the first message is for configuring the first node to be a blockchain node, a type of the first node includes at least one of the following: a terminal device, an access network device, a core network element, an independent node, an application function node, and an edge network node, and the terminal device, the access network device, the core network element, the independent node, the application function node, and the edge network node are nodes having a blockchain capability in a communication network, where
the transceiver unit is configured to send a first indication message, where the first indication message indicates whether the first node is successfully configured.

In a possible implementation, the transceiver unit is further configured to:
send blockchain capability information.

In a possible implementation, the blockchain capability information includes a mode supported by the node, and the mode includes one or more of the following:
a client mode, a micronode mode, a light-node mode, and a full-node mode, where
a node in the client mode is configured to generate a transaction or a transaction proposal;
a node in the micronode mode is configured to preprocess the transaction or the transaction proposal, where the preprocessing the transaction or the transaction proposal includes one or more of the following: verifying the transaction or the transaction proposal; executing the transaction proposal to generate the transaction; and generating a microblock based on the transaction;
a node in the light-node mode is configured to process the transaction, the transaction proposal, or the microblock, and the processing the transaction, the transaction proposal, or the microblock includes one or more of the following: verifying the transaction or the transaction proposal; executing the transaction proposal to generate the transaction; and reaching a consensus on the transaction or the microblock, and generating a complete block based on the transaction or the microblock; and
a node in the full-node mode includes a function of the node in the light-node mode, and is configured to store the complete block.

In a possible implementation, the node in the client mode and the node in the micronode mode include at least one of the following capabilities: a smart-contract deployment, invoking, or execution capability, a transaction reporting, querying, or execution capability, a block querying capability, a computing capability, a storage capability, a network capability, a security algorithm capability, and a trusted-execution-environment provision capability; and
the node in the light-node mode and the node in the full-node mode include at least one of the following capabilities: the smart-contract deployment, invoking, or execution capability, the transaction reporting, querying, or execution capability, the block querying capability, the computing capability, the storage capability, the network capability, the security algorithm capability, the trusted-execution-environment provision capability, and a consensus capability.

In a possible implementation, the blockchain capability information includes at least one of the following capabilities:
a smait-contract deployment, invoking, or execution capability, a transaction reporting, querying, or execution capability, a block querying capability, a computing capability, a storage capability, a network capability, a security algorithm capability, a trusted-execution-environment provision capability, and a consensus capability.

In a possible implementation, the first indication message indicates that the first node is successfully configured; and
the transceiver unit is further configured to:
receive a second message, where the second message is for canceling the first node serving as the blockchain node; and
send a second indication message, where the second indication message indicates whether the first node is successfully canceled.

According to a seventh aspect, this application provides a communication apparatus. The apparatus is a second node, and the apparatus includes:
a processing unit, configured to determine blockchain establishment requirement information; and
a transceiver unit, configured to send the blockchain establishment requirement information.

In a possible implementation, the blockchain establishment requirement information includes one or more of the following requirements:
a blockchain structure, a block structure, a consensus mechanism, a throughput requirement, whether a blockchain supports an editing function, an access control policy for the blockchain, a quantity of first nodes, policy information, identification information of the first node, a capability of the first node, a type of the first node, a mode supported by the first node, configuration information corresponding to the first node, and whether the first node is capable of providing a trusted execution environment for running of the blockchain.

In a possible implementation, the type of the first node includes at least one of the following:
a terminal device, an access network device, a core network element, an independent node, an application function node, and an edge network node, where
the terminal device, the access network device, the core network element, the independent node, the application function node, and the edge network node are nodes having a blockchain capability in a communication network.

In a possible implementation, the transceiver unit is further configured to:
receive a blockchain establishment result; or
receive a blockchain establishment result and a blockchain establishment log, where the blockchain establishment log includes a requirement completion status.

In a possible implementation, the blockchain establishment result includes a blockchain establishment success or a blockchain establishment failure.

In a possible implementation, the mode includes one or more of the following:
a client mode, a micronode mode, a light-node mode, and a full-node mode, where
a node in the client mode is configured to generate a transaction or a transaction proposal;
a node in the micronode mode is configured to preprocess the transaction or the transaction proposal, where the preprocessing the transaction or the transaction proposal includes one or more of the following: verifying the transaction or the transaction proposal; executing the transaction proposal to generate the transaction; and generating a microblock based on the transaction;
a node in the light-node mode is configured to process the transaction, the transaction proposal, or the microblock, and the processing the transaction, the transaction proposal, or the microblock includes one or more of the following: verifying the transaction or the transaction proposal; executing the transaction proposal to generate the transaction; and reaching a consensus on the transaction or the microblock, and generating a complete block based on the transaction or the microblock; and
a node in the full-node mode includes a function of the node in the light-node mode, and is configured to store the complete block.

In a possible implementation, the node in the client mode and the node in the micronode mode include at least one of the following capabilities: a smart-contract deployment, invoking, or execution capability, a transaction reporting, querying, or execution capability, a block querying capability, a computing capability, a storage capability, a network capability, a security algorithm capability, and a trusted-execution-environment provision capability; and
the node in the light-node mode and the node in the full-node mode include at least one of the following capabilities: the smart-contract deployment, invoking, or execution capability, the transaction reporting, querying, or execution capability, the block querying capability, the computing capability, the storage capability, the network capability, the security algorithm capability, the trusted-execution-environment provision capability, and a consensus capability.

According to an eighth aspect, this application provides a communication apparatus. The apparatus is a fourth node, and the apparatus includes:
a transceiver unit, configured to receive a first query request, where the first query request includes policy information, or the first query request includes identification information of a first node, where
the transceiver unit is configured to send a first response message, where when the first query request includes the policy information, the first response message includes identification information of a network element in which the first node is located, address information of the first node, or the identification information of the first node; or when the first query request includes the identification information of the first node, the first response message includes identification information of a network element in which the first node is located or address information of the first node.

A type of the first node includes at least one of the following: a terminal device, an access network device, a core network element, an independent node, an application function node, and an edge network node, and the terminal device, the access network device, the core network element, the independent node, the application function node, and the edge network node are nodes having a blockchain capability in a communication network.

In a possible implementation, the network element in which the first node is located is an access and mobility management function AMF.

In a possible implementation, the type of the first node is the terminal device, the first query request includes the policy information, the first response message includes the identification information of the first node, and the fourth node is a policy control function PCF.

In a possible implementation, the type of the first node is the terminal device, the first query request includes the identification information of the first node, the first response message includes the identification information of the network element in which the first node is located or the address information of the first node, and the fourth node is a unified data management UDM.

In a possible implementation, the first response message includes the identification information of the network element in which the first node is located or the address information of the first node; and
the type of the first node is the access network device, and the fourth node is an operations, administration and maintenance OAM;
the type of the first node is the core network element, and the fourth node is a network repository function NRF; or
the type of the first node is the application function node, and the fourth node is a network exposure function NEF.

In a possible implementation, the apparatus further includes a storage unit.

The transceiver unit is configured to receive blockchain capability information of a plurality of nodes, where the plurality of nodes include at least one first node, the type of the first node includes at least one of the following: the terminal device, the access network device, the core network element, the independent node, the application function node, and the edge network node, and the terminal device, the access network device, the core network element, the independent node, the application function node, and the edge network node are the nodes having a blockchain capability in the communication network.

The storage unit is configured to store the blockchain capability information of the plurality of nodes, where the blockchain capability information is for a ledger anchor function to determine the at least one first node.

According to a ninth aspect, this application provides a communication apparatus. The apparatus may be a LAF. For example, the LAF may be an access network device, a core network element, or another device, may be an apparatus in the access network device, the core network element, or the another device, or may be an apparatus that can be used together with the access network device, the core network element, or the another device. The communication apparatus may alternatively be a chip system. The communication apparatus may perform the method according to the first aspect. A function of the communication apparatus may be implemented by using hardware, or may be implemented by the hardware executing corresponding software. The hardware or the software includes one or more units or modules corresponding to the foregoing function. The unit or the module may be software and/or hardware. For operations performed by the communication apparatus and beneficial effects, refer to the method according to the first aspect and the beneficial effects. Repeated parts are not described again.

According to a tenth aspect, this application provides a communication apparatus. The apparatus may be a first node (for example, the first node may be a terminal device, an access network device, a core network element, an independent node, an application function node, or an edge network node), may be an apparatus in the first node, or may be an apparatus that can be used together with the first node. The communication apparatus may alternatively be a chip system. The communication apparatus may perform the method according to the second aspect. A function of the communication apparatus may be implemented by using hardware, or may be implemented by the hardware executing corresponding software. The hardware or the software includes one or more units or modules corresponding to the foregoing function. The unit or the module may be software and/or hardware. For operations performed by the communication apparatus and beneficial effects, refer to the method according to the second aspect and the beneficial effects. Repeated parts are not described again.

According to an eleventh aspect, this application provides a communication apparatus. The apparatus may be a second node, may be an apparatus in the second node, or may be an apparatus that can be used together with the second node. The communication apparatus may alternatively be a chip system. The communication apparatus may perform the method according to the third aspect. A function of the communication apparatus may be implemented by using hardware, or may be implemented by the hardware executing corresponding software. The hardware or the software includes one or more units or modules corresponding to the foregoing function. The unit or the module may be software and/or hardware. For operations performed by the communication apparatus and beneficial effects, refer to the method according to the third aspect and the beneficial effects. Repeated parts are not described again.

According to a twelfth aspect, this application provides a communication apparatus. The apparatus may be a fourth node, may be an apparatus in the fourth node, or may be an apparatus that can be used together with the fourth node. The communication apparatus may alternatively be a chip system. The communication apparatus may perform the method according to the fourth aspect. A function of the communication apparatus may be implemented by using hardware, or may be implemented by the hardware executing corresponding software. The hardware or the software includes one or more units or modules corresponding to the foregoing function. The unit or the module may be software and/or hardware. For operations performed by the communication apparatus and beneficial effects, refer to the method according to the fourth aspect and the beneficial effects. Repeated parts are not described again.

According to a thirteenth aspect, this application provides a communication apparatus. The apparatus may be a LAF. For example, the LAF may be an access network device, a core network element, or another device. The communication apparatus includes a processor and a transceiver. The processor and the transceiver are configured to execute a computer program or instructions stored in at least one memory, so that the apparatus implements the method according to any one of the implementations of the first aspect. Optionally, the communication apparatus may further include the memory. The processor, the transceiver, and the memory are coupled.

According to a fourteenth aspect, this application provides a communication apparatus. The apparatus may be a first node (for example, the first node may be a terminal device, an access network device, a core network element, an independent node, an application function node, or an edge network node). The communication apparatus includes a processor and a transceiver. The processor and the transceiver are configured to execute a computer program or instructions stored in at least one memory, so that the apparatus implements the method according to any one of the implementations of the second aspect. Optionally, the communication apparatus further includes the memory. The processor, the transceiver, and the memory are coupled.

According to a fifteenth aspect, this application provides a communication apparatus. The apparatus may be a second node. The communication apparatus includes a processor and a transceiver. The processor and the transceiver are configured to execute a computer program or instructions stored in at least one memory, so that the apparatus implements the method according to any one of the implementations of the third aspect. Optionally, the communication apparatus further includes the memory. The processor, the transceiver, and the memory are coupled.

According to a sixteenth aspect, this application provides a communication apparatus. The apparatus may be a core network element (for example, a fourth node, a fifth node, or a sixth node). The communication apparatus includes a processor and a transceiver. The processor and the transceiver are configured to execute a computer program or instructions stored in at least one memory, so that the apparatus implements the method according to any one of the implementations of the fourth aspect. Optionally, the communication apparatus further includes the memory. The processor, the transceiver, and the memory are coupled.

According to a seventeenth aspect, this application provides a computer-readable storage medium. The storage medium stores a computer program or instructions. When the computer program or the instructions are executed by a computer, the method according to any one of the first aspect to the sixth aspect is implemented.

According to an eighteenth aspect, this application provides a computer program product including instructions. The computer program product includes computer program code. When the computer program code is run on a computer, the method according to any one of the first aspect to the sixth aspect is implemented.

According to a nineteenth aspect, a communication system is provided. The communication system includes a LAF and at least one first node.

The LAF sends a first message to the at least one first node, where the first message is for configuring the first node to be a blockchain node, a type of the first node includes at least one of the following: a terminal device, an access network device, a core network element, an independent node, an application function node, and an edge network node, and the terminal device, the access network device, the core network element, the independent node, the application function node, and the edge network node are nodes having a blockchain capability in a communication network.

The at least one first node sends a first indication message to the LAF, where the first indication message indicates whether the first node for sending the first indication information is successfully configured.

In a possible implementation, the communication system further includes a second node, where
the second node is configured to send blockchain establishment requirement information to the LAF; and
that the LAF is configured to send a first message to the at least one first node includes:
   the LAF is configured to send the first message to the at least one first node based on the blockchain establishment requirement information.

In a possible implementation, the blockchain establishment requirement information includes one or more of the following requirements:
a blockchain structure, a block structure, a consensus mechanism, a throughput requirement, whether a blockchain supports an editing function, an access control policy for the blockchain, a quantity of first nodes, policy information, identification information of the first node, a capability of the first node, the type of the first node, a mode supported by the first node, configuration information corresponding to the first node, and whether the first node is capable of providing a trusted execution environment for running of the blockchain.

In a possible implementation, the blockchain establishment requirement information includes the policy information or the identification information of the first node, and the communication system further includes a fourth node; and
that the LAF is configured to send the first message to the at least one first node based on the blockchain establishment requirement information includes:
the LAF is configured to send a first query request to the fourth node, where the first query request includes the policy information, or the first query request includes the identification information of the first node;
the fourth node is configured to send a first response message to the LAF, where when the first query request includes the policy information, the first response message includes identification information of a network element in which the first node is located, address information of the first node, or the identification information of the first node; or when the first query request includes the identification information of the first node, the first response message includes identification information of a network element in which the first node is located or address information of the first node; and
the LAF is configured to send the first message to the at least one first node based on the identification information of the network element in which the first node is located, the address information of the first node, or the identification information of the first node.

In a possible implementation, the network element in which the first node is located is an access and mobility management function AMF.

In a possible implementation, the type of the first node is the terminal device, the first query request includes the policy information, the first response message includes the identification information of the first node, and the fourth node is a policy control function PCF.

In a possible implementation, the type of the first node is the terminal device, the first query request includes the identification information of the first node, the first response message includes the identification information of the network element in which the first node is located or the address information of the first node, and the fourth node is a unified data management UDM.

In a possible implementation, the first response message includes the identification information of the network element in which the first node is located or the address information of the first node; and
the type of the first node is the access network device, and the fourth node is an operations, administration and maintenance OAM;
the type of the first node is the core network element, and the fourth node is a network repository function NRF; or
the type of the first node is the application function node, and the fourth node is a network exposure function NEF.

In a possible implementation,
the LAF is configured to send a blockchain establishment result to the second node based on the first indication message from the at least one first node; or
the LAF is configured to send a blockchain establishment result and a blockchain establishment log to the second node based on the first indication message from the at least one first node, where the blockchain establishment log includes a requirement completion status.

In a possible implementation, the first indication message includes configuration success information or configuration failure information, and the blockchain establishment result includes a blockchain establishment success or a blockchain establishment failure; and
that the LAF is configured to send a blockchain establishment result to the second node based on the first indication message from the at least one first node includes:
the LAF is configured to send the blockchain establishment result to the second node based on an amount of configuration success information included in the first indication message from the at least one first node.

In a possible implementation, if the amount of configuration success information is greater than or equal to a first quantity threshold, the blockchain establishment result is the blockchain establishment success; or
if the amount of configuration success information is less than a first quantity threshold, the blockchain establishment result is the blockchain establishment failure.

In a possible implementation, the at least one first node is further configured to:
send blockchain capability information to the LAF.

In a possible implementation, the LAF is further configured to store the blockchain capability information; or
the LAF is further configured to send the blockchain capability information to the fourth node; and
the fourth node stores the blockchain capability information.

In a possible implementation, the blockchain capability information includes a mode supported by the node, and the mode includes one or more of the following:
a client mode, a micronode mode, a light-node mode, and a full-node mode, where
a node in the client mode is configured to generate a transaction or a transaction proposal;
a node in the micronode mode is configured to preprocess the transaction or the transaction proposal, where the preprocessing the transaction or the transaction proposal includes one or more of the following: verifying the transaction or the transaction proposal; executing the transaction proposal to generate the transaction; and generating a microblock based on the transaction;
a node in the light-node mode is configured to process the transaction, the transaction proposal, or the microblock, and the processing the transaction, the transaction proposal, or the microblock includes one or more of the following: verifying the transaction or the transaction proposal; executing the transaction proposal to generate the transaction; and reaching a consensus on the transaction or the microblock, and generating a complete block based on the transaction or the microblock; and
a node in the full-node mode includes a function of the node in the light-node mode, and is configured to store the complete block.

In a possible implementation, the node in the client mode and the node in the micronode mode include at least one of the following capabilities: a smart-contract deployment, invoking, or execution capability, a transaction reporting, querying, or execution capability, a block querying capability, a computing capability, a storage capability, a network capability, a security algorithm capability, and a trusted-execution-environment provision capability; and
the node in the light-node mode and the node in the full-node mode include at least one of the following capabilities: the smart-contract deployment, invoking, or execution capability, the transaction reporting, querying, or execution capability, the block querying capability, the computing capability, the storage capability, the network capability, the security algorithm capability, the trusted-execution-environment provision capability, and a consensus capability.

In a possible implementation, the blockchain capability information includes at least one of the following capabilities:
a smart-contract deployment, invoking, or execution capability, a transaction reporting, querying, or execution capability, a block querying capability, a computing capability, a storage capability, a network capability, a security algorithm capability, a trusted-execution-environment provision capability, and a consensus capability.

In a possible implementation, the LAF is configured to send a second message to a third node, where the third node is a successfully configured node in the at least one first node, and the second message is for canceling the third node serving as the blockchain node; and
the third node is configured to send a second indication message to the LAF, where the second indication message indicates whether the third node is successfully canceled.

### BRIEF DESCRIPTION OF DRAWINGS

FIG. 1 is a diagram of an architecture of a communication system;
FIG. 2 is a diagram of an architecture of another communication system;
FIG. 3 is a diagram of a blockchain architecture according to an embodiment of this application;
FIG. 4 is a schematic flowchart of a blockchain creation method according to an embodiment of this application;
FIG. 5 is a schematic flowchart of a blockchain creation method according to an embodiment of this application;
FIG. 6 is a schematic flowchart of another blockchain creation method according to an embodiment of this application;
FIG. 7A and FIG. 7B are a diagram of an establishment process of a blockchain comprising a plurality of types of nodes according to an embodiment of this application;
FIG. 8A and FIG. 8B are another diagram of an establishment process of a blockchain comprising a plurality of types of nodes according to an embodiment of this application;
FIG. 9 is a diagram of a structure of a communication apparatus according to an embodiment of this application; and
FIG. 10 is a diagram of a structure of another communication apparatus according to an embodiment of this application.

### DESCRIPTION OF EMBODIMENTS

The following further describes specific embodiments of this application in detail with reference to accompanying drawings.

The terms such as "first" and "second" in the specification, the claims, and the accompanying drawings of this application are for distinguishing between different objects, but are for describing a specific sequence. In addition, the terms "include", "have", and any variant thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in the specification indicates that a particular feature, structure, or characteristic described with reference to this embodiment may be included in at least one embodiment of this application. The phrase shown in various locations in the specification may not necessarily refer to a same embodiment, and is not an independent or alternative embodiment exclusive from another embodiment. It is explicitly and implicitly understood by persons skilled in the art that embodiments described in the specification may be combined with another embodiment.

In this application, "at least one" means one or more, "a plurality of" means two or more, "at least two" means two or three or more. "And/or" is for describing an association relationship between associated objects, and indicates that three relationships may exist. For example, "A and/or B" may indicate the following three cases: Only A exists, only B exists, and both A and B exist, where A and B may be singular or plural. The character "/" usually indicates an "or" relationship between the associated objects. "At least one of the following" or a similar expression thereof indicates any combination of these items, including a single item or any combination of a plurality of items. For example, at least one of a, b, or c may indicate a, b, c, "a and b", "a and c", "b and c", or "a, b, and c", where a, b, and c may be singular or plural.

To better understand embodiments of this application, the following first describes a system architecture in embodiments of this application.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) system such as a new radio (new radio, NR) system, a system evolved after 5G such as a 6th generation (6th generation, 6G) system, and a wireless local area network (Wireless Local Area Network, WLAN). This is not limited herein.

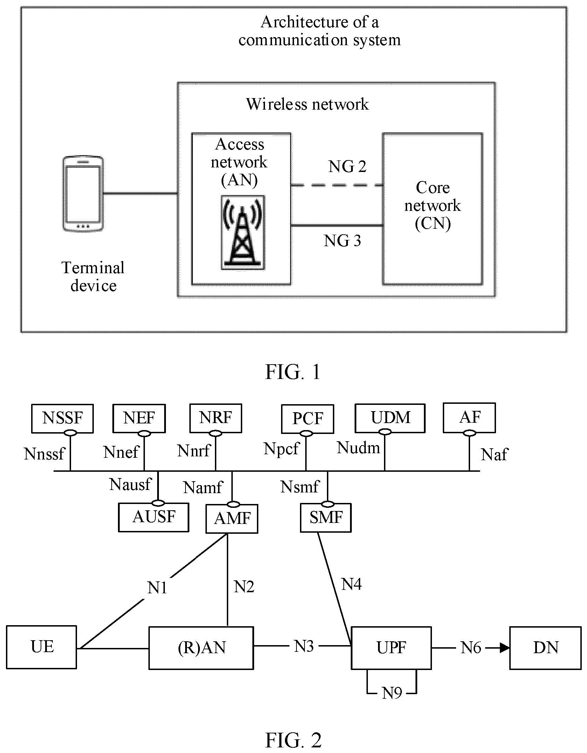

FIG. 1 is a diagram of an architecture of a communication system. As shown in FIG. 1, a terminal device may access a wireless network to communicate with another device through the wireless network. For example, the terminal device may communicate with another terminal device. The wireless network includes a (radio) access network ((radio) access network, (R)AN) and a core network (core network, CN). The (R)AN (described as a RAN below) is for enabling the terminal device to access the wireless network, and the CN is for managing the terminal device. The following separately describes in detail the terminal device, the RAN, and the CN in the system architecture in FIG. 1.

### I. Terminal device

The terminal device includes a device that provides voice and/or data connectivity for a user. For example, the terminal device is a device that has a wireless transceiver function, and may be deployed on land, where the deployment includes indoor, outdoor, handheld, wearable, or vehicle-mounted deployment; may be deployed on water (for example, on a ship); or may be deployed in the air (for example, on an airplane, a balloon, or a satellite). The terminal device may be a mobile phone (mobile phone), a tablet computer (Pad), a computer having a wireless transceiver function, a virtual reality (virtual reality, VR) terminal, an augmented reality (augmented reality, AR) terminal, a wireless terminal in industrial control (industrial control), a vehicle-mounted terminal, a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wearable terminal, or the like. An application scenario is not limited in embodiments of this application. The terminal device may also be sometimes referred to as a terminal, user equipment (user equipment, UE), an access terminal, a vehicle-mounted terminal, a terminal in the industrial control, a UE unit, a UE station, a mobile station, a remote station, a remote terminal, a mobile device, a UE terminal, a wireless communication device, a UE proxy, a UE apparatus, or the like. The terminal may alternatively be fixed or movable. It may be understood that all or some functions of the terminal in this application may alternatively be implemented by using a software function running on hardware, or may be implemented by using an instantiated virtualization function on a platform (for example, a cloud platform).

### II. RAN

The RAN may include one or more RAN devices (in other words, access network devices), and an interface between the access network device and the terminal device may be a Uu interface (also referred to as an air interface). Certainly, in communication evolved after 5G, names of these interfaces may remain unchanged, or may be replaced with other names. This is not limited in this application.

The access network device is a node or a device that enables the terminal device to access the wireless network. The access network device includes, for example, but is not limited to, a next generation NodeB (next generation NodeB, gNB) in a 5G communication system, an evolved NodeB (evolved NodeB, eNB), a next generation evolved NodeB (next generation eNB, ng-eNB), a radio backhaul device, a radio network controller (radio network controller, RNC), a NodeB (NodeB, NB), a home base station (home evolved NodeB (HeNB) or home NodeB (HNB)), a baseband unit (baseband unit, BBU), a transmitting and receiving point (transmitting and receiving point, TRP), a transmitting point (transmitting point, TP), a mobile switching center, or a device that functions as a base station in device-to-device (Device-to-Device, D2D), vehicle-to-everything (vehicle-to-everything, V2X), or machine-to-machine (machine-to-machine, M2M) communication; or may include a central unit (central unit, CU) and a distributed unit (distributed unit, DU) in a cloud radio access network (cloud radio access network, C-RAN) system, a network device that is in a non-terrestrial network (non-terrestrial network, NTN) communication system, that is, may be deployed on a high-altitude platform or a satellite, or the like. This is not specifically limited in embodiments of this application.

### III. CN

The CN may include one or more CN devices (which may also be understood as a network element device, a function network element, a network function (network function, NF), or the like, and is not limited herein).

FIG. 2 is a diagram of an architecture of another communication system. The communication system is a system architecture in a 5G non-roaming scenario. As shown in FIG. 2, the communication system includes the following network functions and entities: a network slice selection function (network slice selection function, NSSF), a network exposure function (network exposure function, NEF), a network repository function (network function repository function, NRF), a policy control function (policy control function, PCF), a unified data management (unified data management, UDM), an application function (application function, AF), an authentication server function (authentication server function, AUSF), an access and mobility management function (access and mobility management function, AMF), a session management function (session management function, SMF), UE, and a (radio) access network ((radio) access network, (R)AN), a user plane function (user plane function, UPF), and a data network (data network, DN).
1. User plane network element: The user plane network element serves as an interface to the data network, and completes functions such as user plane data forwarding, session/flow level-based charging statistics collection, and bandwidth throttling, that is, packet routing and forwarding, quality of service (quality of service, QoS) handling for user plane data, and the like.
   In the 5G communication system, the user plane network element may be a UPF network element.
2. Authentication server: The authentication server performs security authentication on a user. In the 5G communication system, the authentication server may be an AUSF network element.
3. Mobility management network element: The mobility management network element is mainly configured to perform mobility management, access management, and the like. In the 5G communication system, an access management network element may be an AMF network element, and mainly performs functions such as mobility management and access authentication/authorization. In addition, the access management network element is further responsible for transferring a user policy between a terminal and a PCF network element.
4. Session management network element: The session management network element is mainly for session management, assignment and management of an internet protocol (internet protocol, IP) address of the user equipment, selection and control of a user plane function, termination of interfaces toward policy control and charging functions, downlink data notification, and the like.
   In the 5G communication system, the session management network element may be an SMF network element, and completes assignment of an IP address of the terminal, UPF selection, charging and QoS policy control, and the like.
5. Application network element: In the 5G communication system, the application network element may be an AF network element, represents an application function of a third party or an operator, is an interface for obtaining external application data in a 5G network, and is mainly configured to transfer a requirement of an application side for a network side.
6. Unified data management network element: The unified data management network element is responsible for management of a user identifier, subscription data, and authentication data, and registration management of a serving network element of the user. In the 5G communication system, the unified data management network element may be a UDM network element.
7. Policy control network element: The policy control network element includes a user subscription data management function, a policy control function, a charging policy control function, quality of service (quality of service, QoS) control, and the like, is configured to: provide a unified policy framework for governing network behavior, provide policy rule information for a control plane function network element (for example, the AMF or SMF network element), and so on.
   In the 5G communication system, the policy control network element may be the PCF.
8. Network function repository function network element: The network function repository function network element provides a storage function and a selection function of network functional entity information for another core network element. In the 5G communication system, the network element may be an NRF network element.
9. Network exposure network element: In the 5G communication system, the network exposure network element may be a NEF network element, is mainly configured to expose a service and a capability of a 3GPP network function to the AF, and may also enable the AF to provide information for the 3GPP network function.
10. Network slice selection function network element: The network slice selection function network element is responsible for selecting a network slice for the UE. In the 5G communication system, the application network element may be an NSSF network element.

The foregoing function network element may be a network element in a hardware device, a software function running on dedicated hardware, or a virtualization function instantiated on a platform (for example, a cloud platform). One or more services may be obtained through division based on the foregoing function network element. Further, a service independent of a network function may exist. In this application, an instance of the foregoing function network element, an instance of the service included in the foregoing function network element, or an instance of the service independent of the network function may be referred to as a service instance.

In addition, although not shown, the CN may further include another possible network element, for example, a service communication proxy (service communication proxy, SCP), a network slice admission control function (network slice admission control function, NSACF) network element, or a unified data repository (unified data repository, UDR) network element.

It should be learned that, in the 5G communication system, function network elements may have names of the function network elements shown in FIG. 2. In a communication system (for example, a 6G communication system) evolved after 5G, function network elements may still have the names of the function network elements shown in FIG. 2, or may have other names. For example, in the 5G communication system, the policy control network element may be the PCF. In the communication system (for example, 6G communication system) evolved after 5G, the policy control function may still be the PCF, or may have another name. This is not limited in this application.

Nnssf is a service-oriented interface provided by the NSSF, Nnef is a service-oriented interface provided by the NEF, Nnrf is a service-oriented interface provided by the NRF, Npcf is a service-oriented interface provided by the PCF, Nudm is a service-oriented interface provided by the UDM, Naf is a service-oriented interface provided by the AF, Nausf is a service-oriented interface provided by the AUSF, Namf is a service-oriented interface provided by the AMF, Nsmf is a service-oriented interface provided by the SMF, N1 is a reference point between the UE and the AMF, N2 is a reference point between the (R)AN and the AMF, N3 is a reference point between the (R)AN and the UPF, N4 is a reference point between the SMF and the UPF, N6 is a reference point between the UPF and the DN, and N9 is a reference point between UPFs. It should be noted that, for meanings of Nnssf, Nnef, Nnrf, Npcf, Nudm, Naf, Nausf, Namf, Nsmf, N1, N2, N3, N4, N6, and N9 in FIG. 2, refer to meanings defined in a related standard protocol. This is not limited herein.

It should be noted that the communication systems (for example, the communication systems shown in FIG. 1 and FIG. 2) described in embodiments of this application may also be described as telecommunications networks, communication networks, or the like. This is not limited herein.

It should be noted that a name of a network element or a node in this application may also be referred to as another name. This is not limited herein. It should be noted that a new network element or a newly designed network element described in this application may be an entirely new network element, may be an extension, update, addition, or the like of a function of an existing network element, or may be a combination, integration, or the like of functions of a plurality of existing network elements. This is not limited herein.

It should be noted that a fourth node, a fifth node, and a sixth node described in embodiments of this application may be same network elements, or may be different network elements. This is specifically determined based on an actual scenario, and is not limited herein.

For example, when a type of a first node is a terminal device, and blockchain establishment requirement information includes policy information, the fourth node and the fifth node are different network elements. Specifically, the fourth node may be a PCF, and the fifth node may be a UDM.

For another example, when a type of a first node is an access network device, the fourth node, the fifth node, and the sixth node may be the same network elements, for example, OAMs.

For another example, when a type of a first node is a core network element, the fourth node, the fifth node, and the sixth node may be the same network elements, for example, NRFs.

For another example, when a type of a first node is an application function node, the fourth node, the fifth node, and the sixth node may be the same network elements, for example, NEFs.

It should be noted that the node (for example, the first node, a second node, the fourth node, the fifth node, or the sixth node) in embodiments of this application may be a device, a chip, a network function, or the like. This is not limited herein.

To facilitate understanding of related content in embodiments of this application, the following describes some knowledge needed in the solutions in this application. It should be noted that these explanations are intended to facilitate understanding of embodiments of this application, but should not be considered as a limitation on the protection scope claimed in this application.

### 1. Ledger

The ledger is a technology for sharing, replicating, or synchronizing data between nodes by using a consensus mechanism. A blockchain (blockchain, BC) is one of ledger technologies. Based on the ledger, a tamper-proof technology guaranteed by using a cryptography mechanism is further added in the blockchain. Generally, a blockchain node may run on a physical node, or may run in a virtual environment of the physical node. The physical node herein is the first node in this application. It may be understood that, in addition to being applicable to blockchain creation, this application may further be extended to ledger creation. Alternatively, another name subsequently replaces the two names: the blockchain and the ledger. This is not limited herein.

### 2. Ledger anchor function (ledger anchor function, LAF)

The LAF in this application may be a new NF in a core network (that is, deployed in the core network), the LAF may be deployed in a RAN, or the LAF may be deployed in a network element or a device beyond the core network and the RAN. This is not limited herein. The LAF may be configured to perform blockchain-related work in a telecommunications network. For example, the LAF is responsible for management of a life cycle of the blockchain, where the management includes, for example, blockchain deployment and access control. It may be understood that, in this application, a network element configured to perform the blockchain-related work in the telecommunications network may alternatively not be limited to being named the LAF, or may have another name. This is specifically determined based on an actual scenario, and is not limited herein. For ease of description, the following mainly uses the LAF as an example for description. Optionally, the LAF may alternatively be a device, a chip, or the like. This is not limited herein.

### 3. Independent node (independent node, INN)

The INN in this application is a node that is deployed in a communication network and that has a blockchain capability. In other words, the independent node is a node that may be deployed at any location in the telecommunications network and that has the blockchain capability. The independent node complies with a protocol stack of the telecommunications network, and accepts unified management and scheduling performed by the telecommunications network, but is not bound to a communication node, for example, a terminal device, an access network device, or a core network device, in form. It should be noted that, in this application, the node that may be deployed at the any location in the telecommunications network and that has the blockchain capability may alternatively not be limited to being named a LAF, or may have another name. This is specifically determined based on an actual scenario, and is not limited herein. For ease of description, the following mainly uses the independent node as an example for description.

For example, when the independent node is deployed in the terminal device, the independent node complies with a protocol stack of the terminal device; when the independent node is deployed in the RAN, the independent node complies with a protocol stack of the RAN; or when the independent node is deployed in the core network, the independent node complies with a protocol stack of an NF.

For another example, the independent node may alternatively be a software-hardware integrated server designed for a blockchain technology, namely, a blockchain all-in-one machine.

For another example, in some scenarios with a high performance requirement on the blockchain, for example, when a high throughput, high computing, and/or a capability of supporting a plurality of consensus algorithms that are/is of the blockchain are/is needed, an independent node deployed in the RAN may be started when a blockchain node integrated into the RAN cannot satisfy a performance requirement, where the independent node complies with a protocol stack of the RAN to perform communication, and may provide a high-performance blockchain capability.

### 4. AF node and edge network node

A node corresponding to an AF is the AF node. The AF node in this application is a node having a blockchain capability. It may be understood that an objective of interaction between the AF and a 5G core network is to provide a service. According to an operator deployment policy, a trusted AF may directly access an internal network function of the 5G core network to improve service processing efficiency, or may exchange information with the corresponding internal network function via a NEF. In other words, in this application, in addition to being deployed in an internal network element in the telecommunications network, the blockchain node may further be extended to the AF, to be applicable to a scenario in which participation of the AF is needed.

The edge network node is a node used in edge computing. The edge computing is computing performed at or near a physical location of a user or a data source, so that a delay can be reduced, and bandwidth can be saved. The edge network node belongs to the communication network.

### 5. Blockchain structure

The blockchain structure includes a single chain, a parallel chain, a shard, a directed acyclic graph (directed acyclic graph, DAG), and the like. This is not limited herein.

### 6. Block structure

The block structure is content and a data structure inside a block.

### 7. Consensus mechanism

In a decentralized ledger/blockchain technology, the consensus mechanism refers to a process of agreeing on a network/data/transaction status in a decentralized manner, and is also referred to as the consensus algorithm. The consensus mechanism includes a proof-of-work (proof-of-work, PoW) mechanism, a proof-of-stake (proof-of-stake, PoS) mechanism, delegated proof of stake (delegated proof of stake, DPOS), reliable, replicated, redundant, and fault-tolerant (reliable, replicated, redundant, and fault-tolerant, RAFT), practical Byzantine fault tolerance (practical byzantine fault tolerance, PBFT), and the like. This is not limited herein.

### 8. Trusted execution environment (trusted execution environment, TEE)

The TEE is a secure area constructed in a central processing unit by using a software-hardware method, to ensure that a program and data loaded in the TEE are protected in terms of confidentiality and integrity.

### 9. Access control policy for the blockchain

The access control policy for the blockchain includes LAF authorization, LAF access control, LAF transparent transmission, and LAF proxy.

LAF authorization: The LAF performs authorization by using an authorization code. For example, when an entity A accesses the blockchain, A sends an authentication request to the LAF. After performing authentication, the LAF issues the authorization code to A, to indicate an authorization range and an authorization validity period. A holds the authorization code to access the blockchain. The blockchain verifies the authorization code, and accepts the access of A.

LAF access control: The LAF performs access control. For example, the LAF directly verifies A, and A may directly access the blockchain after the verification succeeds. The LAF performs verification at each time of request.

LAF transparent transmission: The LAF performs transparent transmission of an access request, and a ledger node performs access control. For example, the LAF does not perform processing, and directly forwards a request of A to the blockchain, and the blockchain node performs access control.

LAF proxy: The LAF performs a proxy service, and provides access data. For example, A submits the request to the LAF. After verification performed by the LAF succeeds, the LAF obtains the access data from the chain, and then replies to A with the access data.

### 10. Configuration information corresponding to a node

The configuration information corresponding to the node may be understood as a requirement configuration of the blockchain for the node to report a transaction. For example, the configuration information for the node may be a configuration of a trigger condition of transaction reporting, and the trigger condition may be time-based triggering, frequency-based triggering, or condition-based triggering. The time-based triggering means that the transaction is generated based on a time interval, and is reported to the blockchain. For example, the terminal device/a base station is configured to periodically report environment perception information, or the NF is configured to periodically report the network status. The frequency-based triggering means that a configuration is that information reporting is performed once every n times an event occurs, where n is an integer greater than 0. The condition-based triggering means reporting is performed when a condition is satisfied. For example, each time the terminal device accesses an AMF, the transaction is generated and reported. For another example, when network traffic reaches a threshold, the transaction is generated and reported.

### 11. Mode supported by the node.

In this application, the mode supported by the node includes one or more of the following: a client mode, a micronode mode, a light-node mode, and a full-node mode.

A node in client mode is configured to generate the transaction or a transaction proposal. The transaction proposal is transaction content pre-executed by a client. For example, A transfers CNY X to B. The transaction is a state that is of the client and that is after the transaction proposal is executed. For example, A and B initially correspond to CNY 10. A transfers CNY 1 to B. After the transaction is executed, A=CNY 9, and B=CNY 11.

A node in micronode mode is configured to preprocess the transaction or the transaction proposal, where the preprocessing the transaction or the transaction proposal includes one or more of the following: ① verifying the transaction or the transaction proposal; ② executing the transaction proposal to generate the transaction; and ③ generating a microblock based on the transaction. The verifying the transaction or the transaction proposal means verifying a signature and integrity of the transaction or the transaction proposal, and verifying transaction content. The microblock is a block generated in the following manner: After receiving the transaction sent by the client, the micronode verifies validity of the transaction. The micronode generates a transaction tree by performing Merkle processing (not necessarily the Merkle processing) on a transaction on which the verification succeeds, and generates the block by endorsing the transaction tree (the micronode signs the transaction tree).

A node in light-node mode is configured to process the transaction, the transaction proposal, or the microblock, and the processing the transaction, the transaction proposal, or the microblock includes one or more of the following: ① verifying the transaction or the transaction proposal; ② executing the transaction proposal to generate the transaction; and ③ reaching a consensus on the transaction or the microblock, and generating a complete block based on the transaction or the microblock. The complete block is a full block generated in the following manner: A full node/light node receives the microblock sent by the micronode, does not verify a single transaction anymore, only needs to verify a result of endorsing the single transaction by the microblock, performs Merkle processing on a plurality of microblocks, and then encapsulates a plurality of microblocks obtained through the Merkle processing into one block, to generate the full block.

A node in full-node mode includes a function of the node in the light-node mode, and is configured to store the complete block.

### 12. Capability of the node

The capability of the node includes one or more capabilities such as a smart-contract deployment capability, a smart-contract invoking capability, a smart-contract execution capability, a transaction reporting capability, a transaction querying capability, a transaction execution capability, a block querying capability, a computing capability, a storage capability, a network capability, a security algorithm capability, a trusted-execution-environment provision capability, and a consensus capability.

The smart-contract deployment capability means that the node can install a program of a smart contract.

The smart-contract invoking capability means that the node can invoke the program of the smart contract.

The smart-contract execution capability means that the node can execute the program of the smart contract, and provide a computing resource and a running environment for execution of the smart contract.

The transaction reporting capability means that the node can generate a transaction, and send the transaction to the node, where the node may be the full node, the micronode, or the light node.

The transaction querying capability means that the node can query the blockchain for a related transaction by using a keyword, for example, a transaction ID, a transaction hash, a transaction party ID, or transaction content.

The transaction execution capability means that the node can execute a transaction, and obtain a status that is of a transaction party and that is after the transaction is executed.

The block querying capability means that the node can query the blockchain for the related transaction by using a keyword, for example, a block height, a block hash, or block content. The block height is a sequence number of the block on the chain.

The computing capability is a computing processing capability of the blockchain node, for example, the central processing unit (central processing unit, CPU), a graphics processing unit (graphics processing unit, GPU), or a storage status.

The storage capability refers to a size of hard disk space.

The network capability refers to network bandwidth.

The security algorithm capability refers to an algorithm supported by the node.

The trusted-execution-environment provision capability means that the node is capable of providing a trusted execution environment for deployment, invoking, and execution of the smart contract or running of the blockchain.

The consensus capability refers to a consensus algorithm supported by the node.

### 13. Smart contract

The smart contract refers to a protocol that can be for automatically executing a task that originally can be completed only manually. The smart contract is any protocol that can be for automatically executing some functions, for example, a contract that can be for automatically calculating an amount of money to be paid by a contracting party and arranging payment of the money.

It should be noted that, in a communication system, the blockchain may be used in a plurality of scenarios, for example:
Scenario 1: The blockchain in the telecommunications network needs UE/the access network device (for example, the base station) to report information such as an environment, a key performance indicator (key performance indicator, KPI), and surveying and mapping, including:
KPI indicator data information generated by various types of actual operation in a conventional network, where the KPI indicator data information is mainly collected locally by the base station, then directly reported to a local subnetwork management and database system through a private interface, and next reported to a higher-level network management and data center through hierarchical summary statistics; and the UE may report various network KPI data in real time by using the blockchain technology.

Alternatively, a new service needs a large amount of surveying-and-mapping data of a user. For example, a sensor of a tested automobile usually captures images and information of another automobile, a pedestrian, a bicycle, a traffic sign, a traffic light, a roadside, a lane, another infrastructure, and a road landscape. In an IoT network, environment humidity, an environment temperature, an environment condition, and the like are surveyed and mapped. The network may record and store the surveying-and-mapping data by using the blockchain.

Scenario 2: The blockchain in the telecommunications network may alternatively be for recording various dynamic data of a network element.

For example, an operator has service data of the terminal, for example, user profile information (namely, information subscribed to by the user with the operator when the user accesses a network), location information, identification (Identification, ID) information, public land mobile network (public land mobile network, PLMN) information, and service information. The blockchain may provide personal information (for example, a trip during an epidemic) related to the user for the user to use.

Scenario 3: Data on the blockchain in the telecommunications network may alternatively be provided for UE, the RAN, the CN, an application function (namely, a third-party application), and the like as a service.

However, implementation of the foregoing scenarios needs the telecommunications network to have a complete management architecture and method for blockchain capabilities, and blockchain construction and deployment of various entities (for example, the UE, the RAN, and the CN) in the telecommunications network. However, evolution of a current blockchain is independent of network evolution. That is, the current blockchain bypasses the communication network as an independent distributed storage, and cannot be combined with the communication network. In addition, the communication network cannot directly manage and configure the blockchain either.

Based on this, embodiments of this application provide a blockchain creation method, to combine a blockchain with a communication network.

Before the blockchain creation method provided in this application is described, a blockchain architecture to which this application is applicable is first described by using an example.

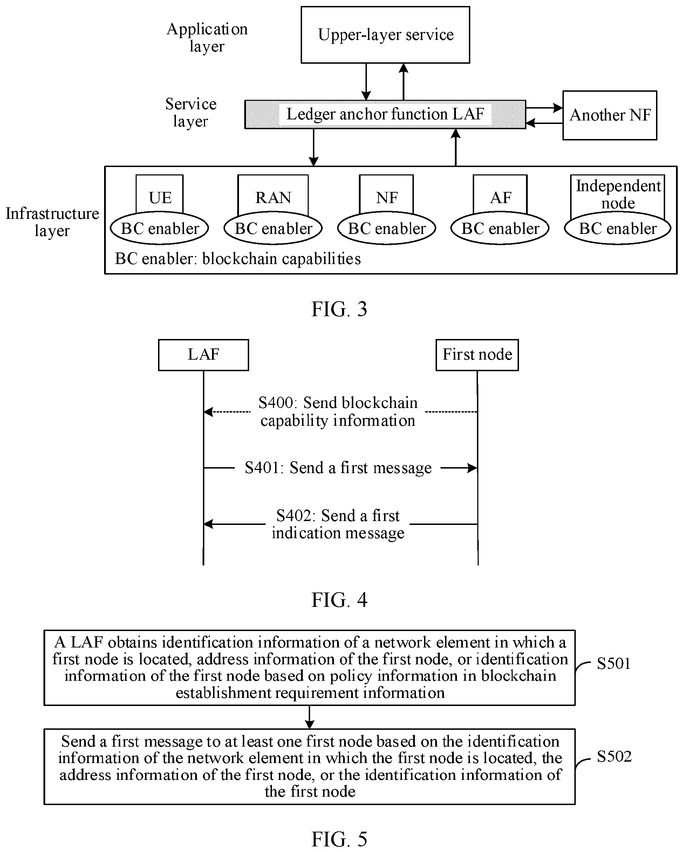

FIG. 3 is a diagram of a blockchain architecture according to an embodiment of this application. As shown in FIG. 3, the blockchain architecture in this application is mainly divided into three layers.
1. An application (Ledger application, LP) layer is an upper-layer service for which a blockchain needs to be deployed in a communication network.
2. A service (Ledger Service, LS) layer is for providing a blockchain as a service (blockchain as a service, BAAS) service for the upper-layer service, shielding details of an infrastructure layer, and managing a node at the infrastructure layer. The service layer includes a LAF, and the LAF may interact with another NF.
3. The infrastructure (Ledger Infrastructure, LI) layer mainly includes UE, a RAN, an NF, an AF, an INN, an edge network node (not shown in the figure), and the like, and is for providing different levels of blockchain capabilities, accepting a configuration of the service layer, and constructing the blockchain. BC enablers identify that nodes (for example, the UE, the RAN, the NF, the AF, and the INN) have blockchain capabilities.

It should be noted that FIG. 3 is merely an example for description. The blockchain architecture is not limited in this application.

The following describes in detail the blockchain creation method and a communication apparatus provided in this application.

FIG. 4 is a schematic flowchart of a blockchain creation method according to an embodiment of this application. As shown in FIG. 4, the blockchain creation method includes the following steps S401 and S402.

S401: A LAF sends a first message to at least one first node.

In some feasible implementations, the LAF sends the first message to the at least one first node, where the first message is for configuring the first node to be a blockchain node, it is understood as that the first message indicates the first node to be the blockchain node, or it is as understood as that the first message is for activating the first node to be the blockchain node. It should be noted that, the configuring the first node to be a blockchain node may be understood as configuring the first node to be a node in a newly established blockchain when the new blockchain is established. Optionally, the configuring the first node to be a blockchain node may alternatively be understood as adding, based on an established blockchain, the first node to be a node in the blockchain. That is, the existing blockchain is managed or maintained. Generally, configuration information included in first messages corresponding to different first nodes is different.

It may be understood that a type of the first node in this application may be one or more of a terminal device, an access network device, a core network element, an independent node, an application function node, an edge network node, and the like. The terminal device, the access network device, the core network element, the independent node, the application function node, and the edge network node are nodes having a blockchain capability in a communication network.

It may be understood that, in this embodiment of this application, the first messages corresponding to the different first nodes are usually different. Optionally, a first message corresponding to any first node may include configuration information for the first node. For example, the configuration information may include a configuration for the first node to report a transaction. For example, when transaction reporting is triggered in a condition-based manner, the configuration information is for configuring a specific transaction condition. For another example, after the first node is activated/triggered/indicated to be the blockchain node, some information about another communication node corresponding to the first node needs to be configured because the blockchain node needs to communicate with the another communication node. Therefore, the another communication node needs to be configured.

Optionally, that a LAF sends a first message to at least one first node may be understood as that the LAF sends the first message to the at least one first node based on blockchain establishment requirement information. Understanding of that the LAF sends the first message to the at least one first node based on blockchain establishment requirement information is described in detail below. Details are not described herein.

The blockchain establishment requirement information may be generated by the LAF. That is, when the LAF has a blockchain establishment requirement, the LAF may determine blockchain establishment requirement information of the LAF, and determine the at least one first node based on the blockchain establishment requirement information. Alternatively, the blockchain establishment requirement information may be generated and sent to the LAF by another node (for ease of description, a second node is used as an example for description subsequently). Therefore, the LAF may determine the at least one first node based on the blockchain establishment requirement information received from the second node. The second node herein is a node having a blockchain establishment requirement. For example, the second node may be a management plane, a management node, or an administrator of an operator. For another example, the second node may be another service layer or a user, for example, a data service node, a vehicle-to-everything node, a vertical industry user, or a terminal user. This is not limited herein.

Generally, the blockchain establishment requirement information includes one or more of the following requirements:
a blockchain structure, a block structure, a consensus mechanism, a throughput requirement, whether a blockchain supports an editing function, an access control policy for the blockchain, a quantity of first nodes, policy information, identification information of the first node, a capability of the first node, the type of the first node, a mode supported by the first node, configuration information corresponding to the first node, and whether the first node is capable of providing a trusted execution environment for running of the blockchain.

A capability of the any first node includes one or more of the following capabilities: a smart-contract deployment capability, a smart-contract invoking capability, a smart-contract execution capability, a transaction reporting capability, a transaction querying capability, a transaction execution capability, a block querying capability, a computing capability, a storage capability, a network capability, a security algorithm capability, a trusted-execution-environment provision capability, a consensus capability, and the like.

A mode supported by the any first node may include a client mode, a micronode mode, a light-node mode, and a full-node mode. Generally, one first node supports only one mode in one blockchain; and modes supported by a same first node in different blockchains may be the same, or may be different. This is not limited herein.

The quantity of first nodes may be understood as a total quantity of first nodes included in the blockchain, the quantity of first nodes may be understood as a minimum quantity of first nodes that need to be included in the blockchain, or the like. This is not limited herein.

The policy information may be understood as information for determining the blockchain node. That is, a first node corresponding to an identifier is not directly specified, and there are some condition constraints. The condition constraints may be for determining the first node.

For example, for the terminal device, policy information of the terminal device may be: 1. a terminal device satisfying performance in a registration phase, for example, a terminal device having the trusted execution environment; 2. a terminal device currently connected to a base station, for example, a terminal device currently connected to a base station whose ID is 1101100100111111; or 3. a terminal device having a fixed location for long time, for example, a terminal device connected, for the long time, to a base station whose ID is 1101100100111111. Examples are not used one by one herein.

For another example, for the access network device, policy information of the access network device may be: 1. location information of the access network device, for example, an access network device located in a cell in an area; or 2. security and computing capabilities of the access network device, for example, an access network device having the trusted execution environment and a CPU 4-core computing capability. Examples are not used one by one herein.

For another example, for the core network element, policy information of the core network element may be a core network element related to a service, for example, a network element that manages mobility; or for another example, a network element whose current traffic is idle.

For another example, for the independent node, policy information of the independent node may be an independent node satisfying some performance requirements, for example, a CPU 64-core independent node, an independent node with a primary storage of 100 G, or an independent node with a gigabit network interface. Examples are not used one by one herein.

For another example, for the application function node, policy information of the application function node may be an application function node satisfying some performance requirements, for example, a CPU 64-core application function node, an application function node with a primary storage of 100 G, or an application function node with a gigabit network interface. Examples are not used one by one herein.

For example, refer to Table 1 below. Table 1 shows a specific example of the blockchain establishment requirement information provided in this embodiment of this application. It should be noted that the blockchain establishment requirement information may include one or more items in Table 1. As shown in Table 1 below, a 1^{st} column indicates a requirement parameter, namely, each requirement in the blockchain establishment requirement information, a 2^{nd} column indicates parameter details, namely, a detailed configuration for a corresponding requirement, and a 3^{rd} column indicates a parameter description, namely, a specific description of a meaning of the requirement parameter.

**Table 1**

| **Requirement parameter** | **Parameter details** | **Parameter description** |
|---|---|---|
| Identification information of the first node | ID 1, ID 2, ID 3, ... | IDs of nodes participating in the blockchain |
| Blockchain structure | Single chain, parallel chain, shard, DAG, ... | Plurality of alternative blockchain forms |
| Consensus mechanism | PoW, RAFT, PBFT, PoW, ... | Plurality of alternative consensus mechanisms |
| Throughput | 100, 500, 1000, ... | Throughput requirements of the blockchain |
| Whether being editable is supported | 0/1 | Whether the blockchain supports the editing function |
| | | 0: no/1: yes (or 0 indicates yes, and 1 indicates no) |
| Quantity of nodes | 4, 5, 6, ... | Quantities of nodes on which the blockchain is to be deployed |
| Whether the terminal device participates | 0/1 | Whether the terminal device participates in the blockchain |
| | | 0: no/1: yes (or 0 indicates yes, and 1 indicates no) |
| Whether the terminal device can provide the trusted execution environment for the running of the blockchain | 0/1 | 0: no/1: yes (or 0 indicates no, and 1 indicates yes) |
| Terminal device supporting the full-node mode | SUPI 1, SUPI 2, ...; or | Explicitly indicate: ID information of terminal devices supporting the full-node mode; or |
| | policy information 1-1, policy information 1-2, ... | |
| | | policy information of terminal devices supporting the full-node mode, for example, 1. the terminal device satisfying performance in a registration phase; 2. the terminal device currently connected to a base station; and 3. the terminal device having a fixed location for long time |
| Terminal device supporting the light-node mode | SUPI 3, SUPI 4, ...; or | Explicitly indicate: ID information of terminal devices supporting the light-node mode; or |
| | policy information 1-3, policy information 1-4, ... | |
| | | policy information of terminal devices supporting the light-node mode, for example, 1. the terminal device satisfying performance in a registration phase; 2. the terminal device currently connected to a base station; and 3. the terminal device having a fixed location for long time |
| Terminal device supporting the micronode mode | SUPI 5, SUPI 6, ...; or | Explicitly indicate: ID information of terminal devices supporting the micronode mode; or |
| | policy information 1-5, policy information 1-6, ... | |
| | | policy information of terminal devices supporting the micronode mode, for example, 1. the terminal device satisfying performance in a registration phase; 2. the terminal device currently connected to a base station; and 3. the terminal device having a fixed location for long time |
| Terminal device supporting the client mode | SUPI 7, SUPI 8, ...; or | Explicitly indicate: ID information of terminal devices supporting the client mode; or |
| | policy information 1-7, policy information 1-8, ... | |
| | | policy information of terminal devices supporting the client mode, for example, 1. the terminal device satisfying performance in a registration phase; 2. the terminal device currently connected to a base station; and 3. the terminal device having a fixed location for long time |
| Whether the access network device participates | 0/1 | Whether the access network device participates in the blockchain |
| | | 0: no/1: yes (or 0 indicates yes, and 1 indicates no) |
| Whether the access network device can provide the trusted execution environment for the running of the blockchain | 0/1 | 0: no/1: yes (or 0 indicates no, and 1 indicates yes) |
| Access network device supporting the full-node mode | ID 2-1, ID 2-2, ...; or | Explicitly indicate: ID information of access network devices supporting the full-node mode; or |
| | policy information 2-1, policy information 2-2, ... | |
| | | policy information of access network devices supporting the full-node mode, for example, 1. the location information of the access network device; and 2. the security and computing capabilities of the access network device |
| Access network device supporting the light-node mode | ID 2-3, ID 2-4, ...; or | Explicitly indicate: ID information of access network devices supporting the light-node mode; or |
| | policy information 2-3, policy information 2-4, ... | |
| | | policy information of access network devices supporting the light-node mode, for example, 1. the location information of the access network device; and 2. the security and computing capabilities of the access network device |
| Access network device supporting the micronode mode | ID 2-5, ID 2-6, ...; or | Explicitly indicate: ID information of access network devices supporting the micronode mode; or |
| | policy information 2-5, policy information 2-6, ... | |
| | | policy information of access network devices supporting the micronode mode, for example, 1. the location information of the access network device; and 2. the security and computing capabilities of the access network device |
| Access network device supporting the client mode | ID 2-7, ID 2-8, ...; or | Explicitly indicate: ID information of access network devices supporting the client mode; or |
| | policy information 2-7, policy information 2-8, ... | |
| | | policy information of access network devices supporting the client mode, for example, 1. the location information of the access network device; and 2. the security and computing capabilities of the access network device |
| Whether the core network element participates | 0/1 | Whether the core network element participates in the blockchain |
| | | 0: no/1: yes (or 0 indicates yes, and 1 indicates no) |
| Whether the core network element can provide the trusted execution environment for the running of the blockchain | 0/1 | 0: no/1: yes (or 0 indicates no, and 1 indicates yes) |
| Core network element supporting the full-node mode | ID 3-1, ID 3-2, ...; or | Explicitly indicate: ID information of core network elements supporting the full-node mode; or |
| | policy information 3-1, policy information 3-2, ... | |
| | | policy information of core network elements supporting the full-node mode, for example, 3-1. core network elements related to a service |
| Core network element supporting the light-node mode | ID 3-3, ID 3-4, ...; or | Explicitly indicate: ID information of core network elements supporting the light-node mode; or |
| | policy information 3-3, policy information 3-4, ... | |
| | | policy information of core network elements supporting the light-node mode, for example, core network elements related to a service |
| Core network element supporting the micronode mode | ID 3-5, ID 3-6, ...; or | Explicitly indicate: ID information of core network elements supporting the micronode mode; or |
| | policy information 3-5, policy information 3-6, ... | |
| | | policy information of core network elements supporting the micronode mode, for example, core network elements related to a service |
| Core network element supporting the client mode | ID 3-7, ID 3-8, ...; or | Explicitly indicate: ID information of core network elements supporting the client mode; or |
| | policy information 3-7, policy information 3-8, ... | |
| | | policy information of core network elements supporting the client mode, for example, core network elements related to a service |
| When the independent node participates | 0/1 | Whether the independent node participates in the blockchain |
| | | 0: no/1: yes (or 0 indicates yes, and 1 indicates no) |
| Whether the independent node can provide the trusted execution environment for the running of the blockchain | 0/1 | 0: no/1: yes (or 0 indicates no, and 1 indicates yes) |
| Independent node supporting the full-node mode | ID 4-1, ID 4-2, ...; or | Explicitly indicate: ID information of independent nodes supporting the full-node mode; or |
| | policy information 4-1, policy information 4-2, ... | |
| | | policy information of independent nodes supporting the full-node mode, for example, 4-1. independent nodes satisfying some performance requirements |
| Independent node supporting the light-node mode | ID 4-3, ID 4-4, ...; or | Explicitly indicate: ID information of independent nodes supporting the light-node mode; or |
| | policy information 4-3, policy information 4-4, ... | |
| | | policy information of independent nodes supporting the light-node mode, for example, independent nodes satisfying some performance requirements |
| Independent node supporting the micronode mode | ID 4-5, ID 4-6, ...; or | Explicitly indicate: ID information of independent nodes supporting the micronode mode; or |
| | policy information 4-5, policy information 4-6, ... | |
| | | policy information of independent nodes supporting the micronode mode, for example, independent nodes satisfying some performance requirements |
| Independent node supporting the client mode | ID 4-7, ID 4-8, ...; or | Explicitly indicate: ID information of independent nodes supporting the client mode; or |
| | policy information 4-7, policy information 4-8, ... | |
| | | policy information of independent nodes supporting the client mode, for example, independent nodes satisfying some performance requirements |
| Whether the application function node participates | 0/1 | Whether the application function node participates in the blockchain |
| | | 0: no/1: yes (or 0 indicates yes, and 1 indicates no) |
| Whether the application function node can provide the trusted execution environment for the running of the blockchain | 0/1 | 0: no/1: yes (or 0 indicates no, and 1 indicates yes) |
| Application function node supporting the full-node mode | ID 5-1, ID 5-2, ...; or | Explicitly indicate: ID information of application function nodes supporting the full-node mode; or |
| | policy information 5-1, policy information 5-2, ... | |
| | | policy information of application function nodes supporting the full-node mode, for example, application function nodes satisfying some performance requirements |
| Application function node supporting the light-node mode | ID 5-3, ID 5-4, ...; or | Explicitly indicate: ID information of application function nodes supporting the light-node mode; or |
| | policy information 5-3, policy information 5-4, ... | |
| | | policy information of application function nodes supporting the light-node mode, for example, application function nodes satisfying some performance requirements |
| Application function node supporting the micronode mode | ID 5-5, ID 5-6, ...; or | Explicitly indicate: ID information of application function nodes supporting the micronode mode; or |
| | policy information 5-5, policy information 5-6, ... | |
| Application function node supporting the client mode | ID 5-7, ID 5-8, ...; or | Explicitly indicate: ID information of application function nodes supporting the client mode; or |
| | policy information 5-7, policy information 5-8, ... | |
| | | policy information of application function nodes supporting the client mode, for example, application function nodes satisfying some performance requirements |
| Access control policy for the blockchain-terminal device | LAF authorization, LAF access control, LAF transparent transmission, and LAF proxy | LAF authorization: The LAF performs authorization by using an authorization code |
| | | LAF access control: The LAF performs access control |
| | | LAF transparent transmission: The LAF performs transparent transmission of an access request, and a ledger node performs access control |
| | | LAF proxy: The LAF performs a proxy service, and provides access data |
| Access control policy for the blockchain-access network device | LAF authorization, LAF access control, LAF transparent transmission, and LAF proxy | Same as above |
| Access control policy for the blockchain-core network element | LAF authorization, LAF access control, LAF transparent transmission, and LAF proxy | Same as above |
| Access control policy for the blockchain-independent node | LAF authorization, LAF access control, LAF transparent transmission, and LAF proxy | Same as above |
| Access control policy for the blockchain-application function node | LAF authorization, LAF access control, LAF transparent transmission, and LAF proxy | Same as above |
| Configuration information-terminal Device | Configuration information | Configuration information delivered by the LAF, for example, a trigger condition of transaction reporting |
| Configuration information-access network device | Configuration information | Same as above |
| Configuration information-core network element | Configuration information | Same as above |
| Configuration information-independent node | Configuration information | Same as above |
| Configuration information-application function node | Configuration information | Same as above |

Optionally, before step S401, the following step S400 may further be included.

S400: A plurality of nodes send blockchain capability information to the LAF. Accordingly, the LAF receives the blockchain capability information from the plurality of nodes.

The plurality of nodes include the at least one first node. In other words, each node having a blockchain capability may report blockchain capability information of the node to the LAF. Alternatively, when blockchain capability information of a node having a blockchain capability is changed or updated, the node may report latest blockchain capability information of the node to the LAF.

In an implementation, blockchain capability information reported by any node may include a mode supported by the node and a capability of the node in mode, for example, the client mode, the micronode mode, the light-node mode, or the full-node mode. This is not limited herein. Generally, a node in the client mode and a node in the micronode mode include at least one of the following capabilities: the smart-contract deployment, invoking, or execution capability, the transaction reporting, querying, or execution capability, the block querying capability, the computing capability, the storage capability, the network capability, the security algorithm capability, and the trusted-execution-environment provision capability. A node in light-node mode and a node in the full-node mode include at least one of the following capabilities: the smart-contract deployment, invoking, or execution capability, the transaction reporting, querying, or execution capability, the block querying capability, the computing capability, the storage capability, the network capability, the security algorithm capability, the trusted-execution-environment provision capability, and the consensus capability.

In another implementation, blockchain capability information reported by any node may alternatively directly include at least one of the following capabilities: the smart-contract deployment capability, the smart-contract invoking capability, the smart-contract execution capability, the transaction reporting capability, the transaction querying capability, the transaction execution capability, the block querying capability, the computing capability, the storage capability, the network capability, the security algorithm capability, the trusted-execution-environment provision capability, the consensus capability, and the like. This is not limited herein. In other words, when reporting the blockchain capability information, the node may not report a mode supported by the node, but report only the capability of the node.

After receiving the blockchain capability information of the plurality of nodes, the LAF may store the blockchain capability information of the plurality of nodes, that is, locally store the received blockchain capability information of the plurality of nodes. Optionally, the LAF may alternatively send the received blockchain capability information of the plurality of nodes to a sixth node. Therefore, the sixth node may receive and store the blockchain capability information of the plurality of nodes from the LAF.

It may be understood that, when the nodes are terminal devices, the sixth node may be a unified data management (unified data management, UDM); when the nodes are access network devices (for example, base stations), the sixth node may be an OAM; when the nodes are NFs, the sixth node may be an NRF; when the nodes are AFs, the sixth node may be a NEF; or when the nodes are INNs, the sixth node may be the LAF, or the sixth node may be another network element or the like. This is not limited herein. Optionally, the sixth node may alternatively be a newly defined network element, for example, a unified trusted data management (unified trusted data management, UTDM). This is not limited herein. The newly defined network element may be configured to store blockchain capability information of one or more types of nodes such as the terminal device, the access network device, the core network element, the independent node, the application function node, and the edge network node. It may be understood that a name of the newly defined network element may alternatively not be limited to the UTDM. For ease of description, the UTDM is mainly used as an example for description subsequently.

It should be noted that the blockchain capability information reported by each node is used by the LAF to determine, before the LAF delivers the first message, a node or nodes satisfying the blockchain establishment requirement, to send first messages to the nodes satisfying the requirement. In other words, the LAF may determine, based on the blockchain establishment requirement information and the blockchain capability information reported by each node, the node or the nodes that may serve as the first node or the first nodes. After determining the first nodes, the LAF may send the first messages to the first nodes.

S402: The LAF receives a first indication message from the at least one first node.

The first indication message indicates whether the first node is successfully configured, or it is understood as that the first indication message indicates whether the first node is successfully activated. Specifically, the first indication message includes configuration success information or configuration failure information, or it is understood as that the first indication message includes activation success information or activation failure information.

Optionally, the LAF may determine a blockchain establishment result based on the first indication message from the at least one first node. The blockchain establishment result includes a blockchain establishment success or a blockchain establishment failure. For example, the LAF may determine the blockchain establishment result based on an amount of configuration success information returned by the first node, or the LAF may determine the blockchain establishment result based on an amount of configuration failure information returned by the first node.

For example, if the amount of configuration success information is greater than or equal to a first quantity threshold, the blockchain establishment result is the blockchain establishment success; or if the amount of configuration success information is less than a first quantity threshold, the blockchain establishment result is the blockchain establishment failure.

For another example, if the amount of configuration failure information is greater than or equal to a second quantity threshold, the blockchain establishment result is the blockchain establishment failure; or if the amount of configuration failure information is less than a second quantity threshold, the blockchain establishment result is the blockchain establishment success.

Optionally, if the amount of configuration success information is less than the first quantity threshold, a node satisfying the blockchain establishment requirement is reselected, and the node is configured to be the blockchain node; or if the amount of configuration failure information is greater than or equal to the second quantity threshold, a node satisfying the blockchain establishment requirement is reselected, and the node is configured to be the blockchain node.

The first quantity threshold and the second quantity threshold may be set to be the same or different. This is specifically determined based on an actual application scenario, and is not limited herein.

Optionally, the LAF may further send a second message to a third node, where the third node is a successfully configured node in the at least one configured first node, and the second message is for canceling the third node serving as the blockchain node. Optionally, the LAF may receive a second indication message from the third node, where the second indication message indicates whether the third node is successfully canceled. In other words, in addition to configuring a node having a blockchain capability to be the blockchain node, the LAF may further cancel or delete one or more nodes in the blockchain, to create or manage the blockchain.

Optionally, the LAF may further update or change configuration information for a configured blockchain node. For example, the first node is a terminal device 1. Assuming that the terminal device 1 is initially configured to be a full node in the blockchain, in a subsequent blockchain management process, the LAF may further update the terminal device 1 to a micronode in the blockchain, and the like. This is specifically determined based on an actual application scenario, and is not limited herein.

Optionally, if the blockchain establishment requirement information is generated and sent to the LAF by the another node, after the LAF determines the blockchain establishment result, the LAF may further send the blockchain establishment result to the another node having the blockchain establishment requirement. Optionally, when the blockchain establishment result is sent, a blockchain establishment log may further be sent, where the blockchain establishment log includes a requirement completion status.

For example, refer to Table 2 below. Table 2 shows a specific example of the blockchain establishment log provided in this embodiment of this application. As shown in Table 2 below, a 1^{st} column indicates a requirement parameter, and a 2^{nd} column indicates an actual requirement completion status. It may be understood that Table 2 is merely an example. During specific implementation, the blockchain establishment log may be provided based on a specific requirement parameter. For example, at least one row in Table 2 is included.

**Table 2**

| **Requirement parameter** | **Requirement completion status** |
|---|---|
| Identification information of the first node | Completed/Uncompleted |
| Blockchain structure | Completed/Uncompleted |
| Consensus mechanism | Completed/Uncompleted |
| Throughput | Completed/Uncompleted |
| Whether being editable is supported | Completed/Uncompleted |
| Access control policy for the blockchain-access network device | LAF authorization |
| Access control policy for the blockchain-core network element | LAF access control |
| Access control policy for the blockchain-independent node | LAF transparent transmission |
| Access control policy for the blockchain-application function node | LAF proxy |
| Access control policy for the blockchain-access network device | LAF access control |

For another example, refer to Table 3 below. Table 3 shows another example of the blockchain establishment log provided in this embodiment of this application. As shown in Table 3 below, a 1^{st} column indicates a type of a node, a 2^{nd} column indicates a requirement configuration for the node, and a 3^{rd} column indicates an actual requirement completion status. It may be understood that Table 3 is merely an example. For example, at least one row in Table 3 may be included.

**Table 3**

| **Type of the node** | **Requirement configuration for the node** | **Requirement completion status** |
|---|---|---|
| Terminal device | SUPI 1-full-node mode | The SUPI 1 succeeds |
| | SUPI 2-full-node mode | The SUPI 2 fails |
| | ... | ... |
| Access network device | gNB 1-full-node mode | A gNB 1 succeeds |
| | gNB 2-light-node mode | A gNB 2 succeeds |
| | ... | ... |
| Core network element | Null | Null |
| Independent node | Null | Null |
| Application function node | AF 1-full-node mode | An AF 1 succeeds |
| | AF 2-client mode | An AF 2 succeeds |
| | ... | ... |

In this embodiment of this application, the communication network is combined with the blockchain, so that the communication network directly creates and manages the blockchain. A decentralized public key infrastructure (decentralized public key infrastructure, DKPI) service is used as an example. The administrator (namely, the second node) of the operator may send a chain establishment requirement of a DPKI to the LAF. After parsing the requirement, the LAF determines nodes on which the DPKI is to be deployed, and respective modes of deployment on the nodes. Therefore, the LAF publishes first messages to the nodes to configure the nodes to be blockchain nodes. According to this embodiment of this application, the LAF can automatically parse a blockchain creation requirement of a requirementer, comprehensively manage an infrastructure of the blockchain in the telecommunications network, shield details of an underlying blockchain in the telecommunications network for the requirementer, and provide a more convenient blockchain creation/management service for the requirementer.

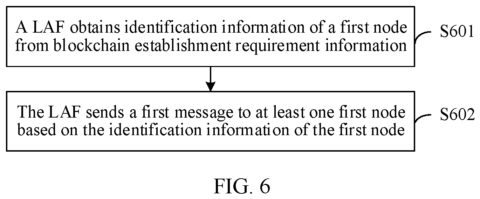

With reference to FIG. 5 and FIG. 6, the following separately describes in detail a process of sending the first message to the at least one first node based on the blockchain establishment requirement information in step S401. Blockchain establishment requirement information in FIG. 5 includes the policy information, and blockchain establishment requirement information in FIG. 6 includes the identification information of the first node.

FIG. 5 is a schematic flowchart of a blockchain creation method according to an embodiment of this application. As shown in FIG. 5, the blockchain creation method includes S501 and S502.

S501: A LAF obtains identification information of a network element in which a first node is located, address information of the first node, or identification information of the first node based on policy information in blockchain establishment requirement information.

In an implementation, that a LAF obtains identification information of a network element in which a first node is located, address information of the first node, or identification information of the first node based on policy information in blockchain establishment requirement information may be understood as that the LAF obtains, from information locally stored by the LAF, the identification information of the network element in which the first node is located, the address information of the first node, or the identification information of the first node based on the policy information. In other words, the LAF may store information related to the first node. For example, when a type of the first node is an independent node, because the independent node is an entity that does not exist in an existing communication network, the LAF may store information about the independent node.

It may be understood that identification information of any first node may uniquely identify the first node. For example, when a type of the first node is a terminal device, the identification information of the first node may be subscription permanent identifier (subscription permanent identifier, SUPI) information, a device ID, an international mobile equipment identity (international mobile equipment identity, IMEI), or the like. This is not limited herein. When a type of the first node is an access network device, the identification information of the first node may be a physical cell identifier (physical cell identifier, PCI), a cell global identifier (cell global identifier, CGI), a device ID, or the like. This is not limited herein. When a type of the first node is a core network element, the identification information of the first node may be a fully qualified domain name (fully qualified domain name, FQDN), a uniform resource identifier (uniform resource identifier, URI), a network function ID, or the like. This is not limited herein. When a type of the first node is an application function node, the identification information of the first node may be an FQDN, a URI, or the like. This is not limited herein. When the type of the first node is the independent node, the identification information of the first node may be an FQDN, a URI, a node ID, or the like. This is not limited herein.

In another implementation, that a LAF obtains identification information of a network element in which a first node is located, address information of the first node, or identification information of the first node based on policy information in blockchain establishment requirement information may be understood as follows: The LAF sends a first query request to a fourth node, where the first query request includes the policy information. Accordingly, the fourth node receives the first query request from the LAF. Further, the fourth node may obtain the identification information of the network element in which the first node is located, the address information of the first node, or the identification information of the first node based on the policy information included in the first query request, and further feed back a first response message to the LAF, where the first response message carries the identification information of the network element in which the first node is located, the address information of the first node, or the identification information of the first node. The following separately describes in detail cases in which types of the first node are a terminal device, an access network device, a core network element, an independent node, an application function node, and an edge network node.

In an example, a type of the first node is the terminal device. The LAF may obtain, based on the policy information by using the following steps, the identification information of the network element in which the first node is located: S1. The LAF sends the first query request to the fourth node, where the first query request includes the policy information. Accordingly, the fourth node receives the first query request from the LAF. Further, the fourth node may obtain the identification information (for example, a SUPI) of the first node based on the policy information included in the first query request. S2: The fourth node feeds back the first response message to the LAF, where the first response message includes the SUPI. S3: The LAF sends a second query request to a fifth node, where the second query request includes the SUPI. Accordingly, the fifth node receives the second query request from the LAF, and obtains, based on the SUPI included in the second query request, the identification information of the network element (for example, an AMF) in which the first node is located. S4: The fifth node feeds back a second response message to the LAF, where the second response message includes the identification information of the AMF. In an implementation, the fourth node may be specifically a PCF, and the fifth node may be specifically a UDM. Optionally, in another implementation, when the fourth node is a new network element, the fourth node may include information related to one or more types of nodes such as the terminal device, the access network device, the core network element, the application function node, the independent node, and the edge network node. For example, the fourth node may be referred to as a UTDM, or the fourth node may have another name. This is not limited herein. In other words, information related to the terminal device, the access network device, the core network element, the application function node, the independent node, and/or the edge network node may be aggregated to a same network function (namely, the fourth node, where for example, the fourth node may be the UTDM). Therefore, the terminal device may directly obtain, through query from the fourth node based on the policy information, the AMF in which the terminal device is located.

In another example, a type of the first node is the access network device. The fourth node may be specifically an OAM, a UTDM, or the like. This is not limited herein.

It should be noted that, when a type of the first node is the terminal device or the access network device, information that is about the first node and that is obtained by the LAF based on the policy information is the identification information of the network element in which the first node is located. For example, the network element in which the first node is located may be an AMF. This is not limited herein.

When a type of the first node is the core network element or the application function node, information that is about the first node and that is obtained by the LAF based on the policy information may be the address information of the first node. For example, the address information of the first node may be an internet protocol (internet protocol, IP) address. Optionally, when the type of the first node is the core network element or the application function node, the information that is about the first node and that is obtained by the LAF based on the policy information may alternatively be the identification information of the first node. For example, the identification information of the first node may be an FQDN, a URI, or the like. This is not limited herein.

In another example, when a type of the first node is the core network element, the fourth node may be specifically an NRF, a UTDM, or the like. This is not limited herein.

In another example, a type of the first node is the application function node. The fourth node may be specifically a NEF, a UTDM, or the like. This is not limited herein.

When a type of the first node is the independent node, information that is about the first node and that is obtained by the LAF based on the policy information may be whether the node is currently idle, a current resource occupation status, a physical location, address information (for example, an IP address), an FQDN, a URI, and/or the like. Specifically, the fourth node may be a UTDM or the like. This is not limited herein.

In another example, when a type of the first node is the edge network node, the fourth node may be specifically a UTDM or the like. This is not limited herein.

S502: The LAF sends a first message to at least one first node based on the identification information of the network element in which the first node is located, the address information of the first node, or the identification information of the first node.

In some feasible implementations, after the LAF obtains the identification information of the network element in which the first node is located, the address information of the first node, or the identification information of the first node, the LAF may send the first message to the at least one first node based on the identification information of the network element in which the first node is located, the address information of the first node, or the identification information of the first node.

Specifically, when the type of the first node is the terminal device or the access network device, the LAF may send the first message to the first node via the network element (for example, the AMF) in which the first node is located.

When the type of the first node is the core network element or the application function node, the LAF may send the first message to the first node via the IP address of the first node, or the LAF may send the first message to the first node via the FQDN or the URI.

When the type of the first node is the independent node, the LAF may send the first message to the first node via the FQDN or the URI.

FIG. 6 is a schematic flowchart of another blockchain creation method according to an embodiment of this application. As shown in 6, the blockchain creation method includes S601 and S602.

S601: A LAF obtains identification information of a first node from blockchain establishment requirement information.

In other words, the blockchain establishment requirement information may directly include the identification information of the first node. For understanding of the identification information of the first node, refer to the related descriptions in S501. Details are not described herein again.

S602: The LAF sends a first message to at least one first node based on the identification information of the first node.

In an implementation, the LAF may directly send the first message to the at least one first node based on the identification information of the first node. For example, when a type of the first node is a core network element, the identification information of the first node is a URI. Therefore, the LAF may send the first message to the corresponding core network element based on the URI. In another example, when a type of the first node is an application function node, the identification information of the first node is a URI. Therefore, the LAF may send the first message to the corresponding application function node based on the URI.

In another implementation, that the LAF sends a first message to at least one first node based on the identification information of the first node may be understood as that the LAF obtains identification information of a network element in which the first node is located or address information of the first node based on the identification information of the first node, and further sends the first message to the at least one first node based on the identification information of the network element in which the first node is located or the address information of the first node.

That the LAF obtains information about the first node based on the identification information of the first node may be understood as follows: The LAF sends a second query request to a fifth node, where the second query request includes the identification information of the first node. Accordingly, the fifth node receives the second query request from the LAF, further obtains the identification information of the network element in which the first node is located or the address information of the first node based on the identification information of the first node in the second query request, and further feeds back a second response message to the LAF, where the second response message includes the identification information of the network element in which the first node is located or the address information of the first node. The following separately describes in detail cases in which types of the first node are a terminal device, an access network device, a core network element, an independent node, an application function node, and an edge network node.

For example, when a type of the first node is the terminal device, the fifth node is a UDM, and the information about the first node obtained based on the identification information of the first node is the identification information of the network element in which the first node is located. For example, a network element in which the terminal device is located is an AMF.

For example, when a type of the first node is an access network device, the fifth node may be an OAM, and the information about the first node obtained based on the identification information of the first node is the identification information of the network element in which the first node is located. For example, a network element in which the access network device is located is an AMF.

For example, when a type of the first node is the core network element, the fifth node may be an NRF, and the information about the first node obtained based on the identification information of the first node is the address information of the first node. For example, an address information of the core network element is an IP address of the core network element.

For example, when a type of the first node is the application function node, the fifth node may be a NEF, and the information about the first node obtained based on the identification information of the first node is the address information of the first node. For example, address information of the application function node is an IP address.

Optionally, the LAF may also aggregate all information related to the terminal device, the access network device, the core network element, the application function node, the independent node, and/or the edge network node. Therefore, that the LAF obtains identification information of a network element in which the first node is located or address information of the first node based on the identification information of the first node is internal implementation of the LAF.

Optionally, the fifth node may alternatively be a new network element, for example, a UTDM or another name. The new network element aggregates all the information related to the terminal device, the access network device, the core network element, the application function node, the independent node, and/or the edge network node.

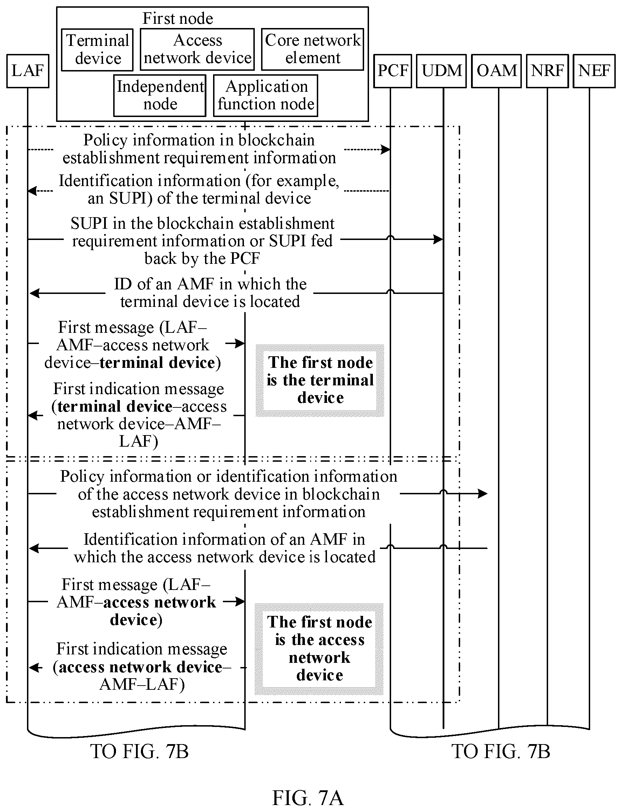

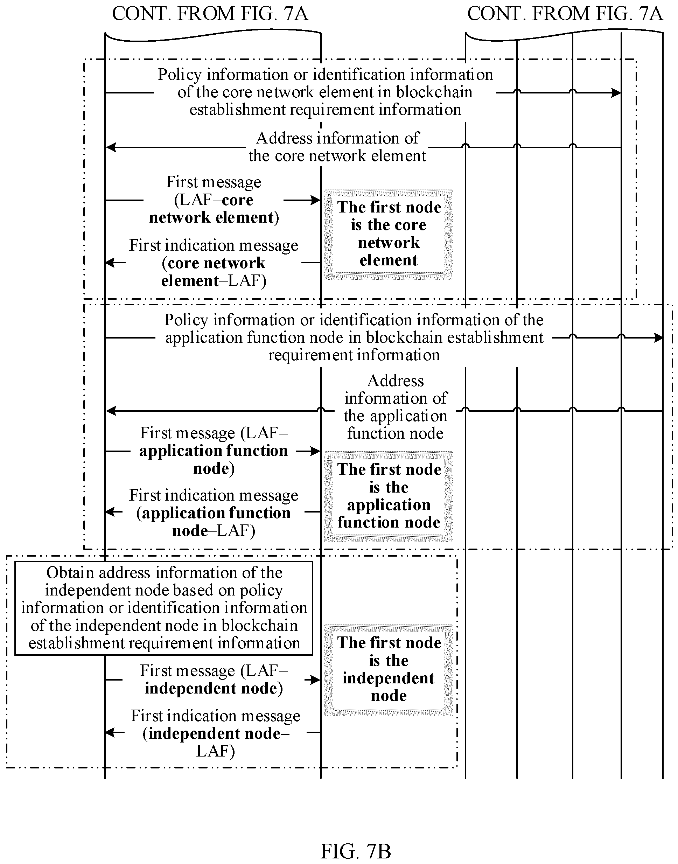

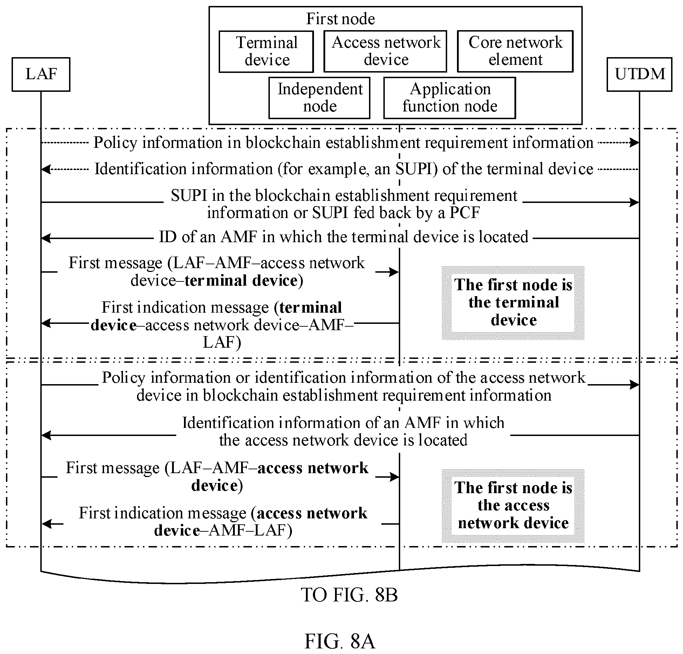

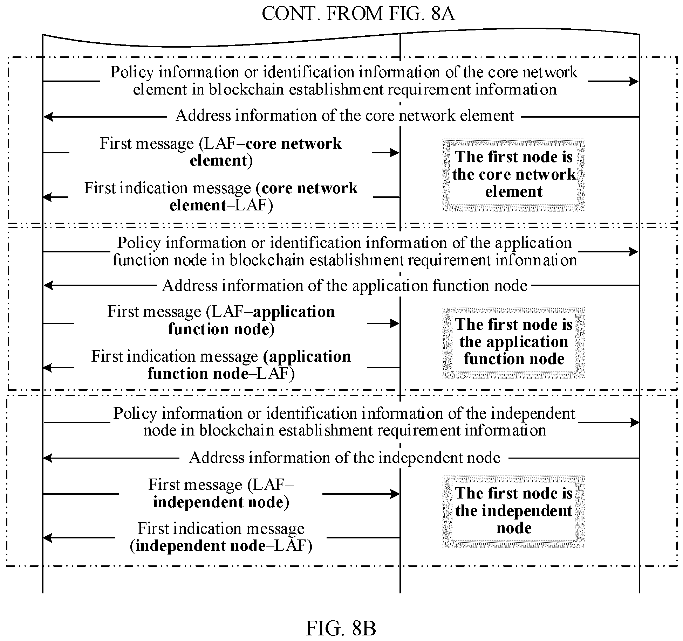

It may be understood that, to make the solutions in FIG. 5 and FIG. 6 clearer, the following provides further descriptions with reference to FIG. 7A, FIG. 7B, FIG. 8A, and FIG. 8B.

FIG. 7A and FIG. 7B are a diagram of an establishment process of a blockchain comprising a plurality of types of nodes according to an embodiment of this application. As shown in FIG. 7A and FIG. 7B, in a blockchain establishment requirement, the blockchain may need to be deployed on a plurality of types of first nodes, for example, one or more types of nodes such as a terminal device, an access network device, a core network element, an application function node, and an independent node. After parsing blockchain establishment requirement information, a LAF needs to interact with other network elements to obtain information about the first nodes, for example, identification information of an AMF (namely, an AMF ID) in which the terminal device is located, an ID of an AMF in which the access network device is located, address information (for example, an IP address) of the core network element, and address information (for example, an IP address) of the application function node. As shown in FIG. 7A and FIG. 7B, functions of the other network elements may still use the standard in 5G. For example, a UDM stores information about the terminal device, an OAM stores information about the access network device, an NRF stores information about the core network element, and a NEF stores information about the application function node. Because the independent node is an entity that does not exist in an existing telecommunications network, the LAF may store information about the independent node, or another network element may store information about the independent node. For ease of description, in FIG. 7A and FIG. 7B, an example in which the LAF stores the information about the independent node is mainly used for description. Details are as follows:
1. When the blockchain is deployed on the terminal device:
   The LAF requests the information about the terminal device from the UDM. The information may specifically include blockchain capability information reported by the terminal device, and/or may include one or more of the following information: information such as an identifier of the AMF in which the terminal device is located. There are the following two cases in which the LAF queries the UDM.
   (a) When the blockchain establishment requirement information includes identification information of the terminal device, for example, SUPI information of the terminal device, the LAF queries, based on the SUPI information, the UDM for the ID of the AMF in which the terminal device is located, and the UDM returns the ID of the AMF in which the terminal device is located. Therefore, the LAF may communicate with the terminal device via the AMF. That is, the LAF sends a first message to the terminal device via the AMF and an access network device served by the AMF, and receives a first indication message fed back by the terminal device.
   (b) When the blockchain establishment requirement information includes policy information, for example, a terminal device at a location, the LAF first queries a PCF for SUPI information of the terminal device at the location, and the PCF returns the SUPI information of the terminal device to an AMF. Further, the LAF queries, based on an SUPI, the UDM for an ID of an AMF in which the terminal device is located, and the UDM returns the ID of the AMF in which the terminal device is located. Therefore, the LAF may communicate with the terminal device via the AMF. That is, the LAF sends a first message to the terminal device via the AMF and an access network device served by the AMF, and receives a first indication message fed back by the terminal device.
2. When the blockchain is deployed on the access network device:
   The LAF requests the information about the access network device from the OAM. The information may specifically include blockchain capability information reported by the access network device, and/or may include one or more of the following information:
   information such as the identifier of the AMF in which the access network device is located. Specifically, the LAF queries, based on identification information (for example, a PCI) or policy information (for example, an access network device at a location) of the access network device included in the blockchain establishment requirement information, the UDM for the ID of the AMF in which the access network device is located, and the UDM returns the ID of the AMF in which the access network device is located. Therefore, the LAF may communicate with the access network device via the AMF. That is, the LAF sends a first message to the access network device via the AMF, and receives a first indication message fed back by the access network device.
3. When the blockchain is deployed on the core network element, the LAF requests the information about the core network element from the NRF (for example, queries the NRF via identification information or policy information of the core network element). The information may specifically include blockchain capability information reported by the core network element, and/or may include one or more of the following information: information such as an IP address, an FQDN, a URI that are of the core network element, and a home PLMN of the core network element. The LAF may send a first message to the core network element via the IP address, and receive a first indication message fed back by the core network element. Optionally, the LAF may alternatively directly send the first message to the core network element via the identification information (for example, the FQDN or the URI) of the core network element, and receive the first indication message fed back by the core network element.
4. When the blockchain is deployed on the application function node, the LAF queries the NEF for the information about the application function node (for example, queries the NEF via identification information or policy information of the application function node). The information may specifically include blockchain capability information reported by the application function node; and/or may include one or more of the following information: information such as the IP address, an FQDN, and a URI that are of the application function node, and a third-party enterprise corresponding to the application function node. The LAF may send a first message to the application function node via the IP address or a location, and receive a first indication message fed back by the application function node. Optionally, the LAF may alternatively directly send the first message to the application function node via the identification information (for example, the FQDN or the URI) of the application function node, and receive the first indication message fed back by the application function node.
5. When the blockchain is deployed on the independent node, the LAF obtains the information about the independent node through self-querying (for example, self-querying via identification information or policy information of the independent node). The information may specifically include blockchain capability information of the independent node, and/or may include one or more of the following information: information such as a location of the independent node (for example, a physical location of the independent node, or a data center/data cloud in which the independent node is located), and an IP address. The LAF may send a first message to the independent node via the IP address, and receive a first indication message fed back by the independent node. Optionally, the LAF may alternatively directly send the first message to the independent node via the identification information (for example, an FQDN or a URI) of the independent node, and receive the first indication message fed back by the independent node.

FIG. 8A and FIG. 8B are another diagram of an establishment process of a blockchain comprising a plurality of types of nodes according to an embodiment of this application. As shown in FIG. 8A and FIG. 8B, in a blockchain establishment requirement, the blockchain may need to be deployed on a plurality of types of first nodes, for example, one or more types of nodes such as a terminal device, an access network device, a core network element, an application function node, and an independent node. After parsing blockchain establishment requirement information, a LAF needs to interact with another network element to obtain information about the first nodes. Herein, for example, the another network element is a new network element, for example, a UTDM. Details are as follows:
1. When the blockchain is deployed on the terminal device:
   The LAF requests information about the terminal device from the UTDM based on identification information of the terminal device or policy information included in the blockchain establishment requirement information. The information may specifically include blockchain capability information reported by the terminal device, and/or may include one or more of the following information: information such as an identifier of an AMF in which the terminal device is located. The LAF may communicate with the terminal device via the AMF. That is, the LAF sends a first message to the terminal device via the AMF and an access network device served by the AMF, and receives a first indication message fed back by the terminal device.
2. When the blockchain is deployed on the access network device:
   The LAF requests information about the access network device from the UTDM based on identification information of the access network device or policy information included in the blockchain establishment requirement information. The information may specifically include blockchain capability information reported by the access network device, and/or may include one or more of the following information: information such as an identifier of an AMF in which the access network device is located. The LAF may communicate with the access network device via the AMF. That is, the LAF sends a first message to the access network device via the AMF, and receive a first indication message fed back by the access network device.
3. When the blockchain is deployed on the core network element, the LAF requests information about the core network element from the UTDM based on identification information of the core network element or policy information included in the blockchain establishment requirement information. The information may specifically include blockchain capability information reported by the core network element, and/or may include one or more of the following information: information such as an IP address, an FQDN, a URI that are of the core network element, and a PLMN corresponding to the core network element. The LAF may send a first message to the core network element via the IP address, and receive a first indication message fed back by the core network element. Optionally, the LAF may alternatively directly send the first message to the core network element via the identification information (for example, the FQDN or the URI) of the core network element, and receive the first indication message fed back by the core network element.
4. When the blockchain is deployed on the application function node, the LAF queries the UTDM for information about the application function node based on identification information of the application function node or policy information included in the blockchain establishment requirement information. The information may specifically include blockchain capability information reported by the application function node; and/or may include one or more of the following information: information such as an IP address, an FQDN, and a URI that are of the application function node, and a third-party enterprise corresponding to the application function node. The LAF may send a first message to the application function node via the IP address, and receive a first indication message fed back by the application function node. Optionally, the LAF may alternatively directly send the first message to the application function node via the identification information (for example, the FQDN or the URI) of the application function node, and receive the first indication message fed back by the application function node.
5. When the blockchain is deployed on the independent node, the LAF queries the UTDM for information about the independent node based on identification information of the independent node or policy information included in the blockchain establishment requirement information. The information may specifically include blockchain capability information reported by the independent node, and/or may include one or more of the following information: information such as an IP address of the independent node. The LAF may send a first message to the independent node via the IP address or a location, and receive a first indication message fed back by the independent node. Optionally, the LAF may alternatively directly send the first message to the independent node via the identification information (for example, an FQDN or a URI) of the independent node, and receive the first indication message fed back by the independent node.

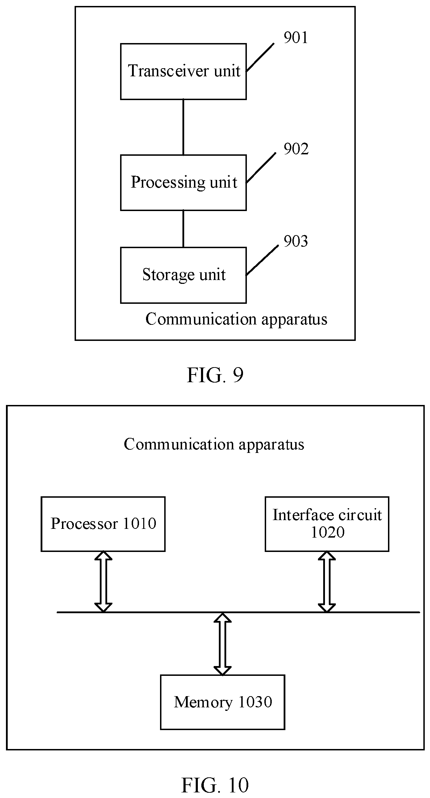

With reference to FIG. 9 and FIG. 10, the following describes in detail the communication apparatus provided in this application.

FIG. 9 is a diagram of a structure of a communication apparatus according to an embodiment of this application. The communication apparatus shown in FIG. 9 may be configured to implement some or all functions of the LAF in embodiments corresponding to the blockchain creation methods, the communication apparatus shown in FIG. 9 may be configured to implement some or all functions of the first node in embodiments corresponding to the blockchain creation methods, the communication apparatus shown in FIG. 9 may be configured to implement some or all functions of the second node in embodiments corresponding to the blockchain creation methods, the communication apparatus shown in FIG. 9 may be configured to implement some or all functions of the fourth node in embodiments corresponding to the blockchain creation methods, the communication apparatus shown in FIG. 9 may be configured to implement some or all functions of the fifth node in embodiments corresponding to the blockchain creation methods, or the communication apparatus shown in FIG. 9 may be configured to implement some or all functions of the sixth node in embodiments corresponding to the blockchain creation methods.

As shown in FIG. 9, the apparatus may include a transceiver unit 901, a processing unit 902, and/or a storage unit 903. The processing unit 902 is configured to perform data processing. The transceiver unit 901 is integrated with a receiving unit and a sending unit. The storage unit 903 is configured to store data/information, for example, blockchain capability information. The transceiver unit 901 may also be referred to as a communication unit. Alternatively, the transceiver unit 901 may be split into a receiving unit and a sending unit. Optionally, the apparatus further includes a storage unit (not shown in FIG. 9 temporarily). The storage unit may be configured to store instructions and/or the data, and the processing unit 902 may read the instructions and/or the data in the storage unit, so that the apparatus implements an action of the LAF, the first node, the second node, the fourth node, the fifth node, or the sixth node in the foregoing method embodiments.

In an implementation, the communication apparatus is a LAF, may be an apparatus in the LAF, or may be an apparatus that can be used together with the LAF. For example, the LAF may be specifically a core network element or deployed in an access network device. This is not limited herein. The communication apparatus may alternatively be a chip system.

The transceiver unit 901 is configured to send a first message to at least one first node, where the first message is for configuring the first node to be a blockchain node, a type of the first node includes at least one of the following: a terminal device, an access network device, a core network element, an independent node, an application function node, and an edge network node, and the terminal device, the access network device, the core network element, the independent node, the application function node, and the edge network node are nodes having a blockchain capability in a communication network.

The transceiver unit 901 is configured to receive a first indication message from the at least one first node, where the first indication message indicates whether the first node is successfully configured.

In a possible implementation, the transceiver unit 901 is further configured to receive blockchain establishment requirement information from a second node; and
the apparatus further includes the processing unit 902, where
when the first message is sent to the at least one first node, the processing unit 902 is further configured to:
   send the first message to the at least one first node based on the blockchain establishment requirement information by using the transceiver unit 901.

In a possible implementation, the blockchain establishment requirement information includes one or more of the following requirements:
a blockchain structure, a block structure, a consensus mechanism, a throughput requirement, whether a blockchain supports an editing function, an access control policy for the blockchain, a quantity of first nodes, policy information, identification information of the first node, a capability of the first node, the type of the first node, a mode supported by the first node, configuration information corresponding to the first node, and whether the first node is capable of providing a trusted execution environment for running of the blockchain.

In a possible implementation, the blockchain establishment requirement information includes the policy information; and the apparatus further includes the processing unit 902, where
when the first message is sent to the at least one first node based on the blockchain establishment requirement information, the processing unit 902 is configured to:
obtain identification information of a network element in which the first node is located, address information of the first node, or identification information of the first node based on the policy information; and
send the first message to the at least one first node based on the identification information of the network element in which the first node is located, the address information of the first node, or the identification information of the first node by using the transceiver unit 901.

In a possible implementation, when obtaining the identification information of the network element in which the first node is located, the address information of the first node, or the identification information of the first node based on the policy information, the processing unit 902 is configured to:
send a first query request to a fourth node by using the transceiver unit 901, where the first query request includes the policy information; and
receive a first response message from the fourth node by using the transceiver unit 901, where the first response message includes the identification information of the network element in which the first node is located, the address information of the first node, or the identification information of the first node.

In a possible implementation, the blockchain establishment requirement information includes the identification information of the first node; and the apparatus further includes the processing unit 902, where
when the first message is sent to the at least one first node based on the blockchain establishment requirement information, the processing unit 902 is configured to:
send the first message to the at least one first node based on the identification information of the first node by using the transceiver unit 901.

In a possible implementation, when the first message is sent to the at least one first node based on the identification information of the first node, the processing unit 902 is configured to:
obtain the identification information of the network element in which the first node is located or the address information of the first node based on the identification information of the first node; and
send the first message to the at least one first node based on the identification information of the network element in which the first node is located or the address information of the first node by using the transceiver unit 901.

In a possible implementation, when obtaining the identification information of the network element in which the first node is located or the address information of the first node based on the identification information of the first node, the processing unit 902 is configured to:
send a second query request to a fifth node by using the transceiver unit 901, where the second query request includes the identification information of the first node; and
receive a second response message from the fifth node by using the transceiver unit 901, where the second response message includes the identification information of the network element in which the first node is located or the address information of the first node.

In a possible implementation, the network element in which the first node is located is an access and mobility management function AMF.

In a possible implementation, the type of the first node is the terminal device; and the first response message includes the identification information of the first node, or the second response message includes the identification information of the network element in which the first node is located or the address information of the first node; and
the fourth node is a policy control function PCF, or the fifth node is a unified data management UDM.

In a possible implementation, the first response message includes the identification information of the network element in which the first node is located or the address information of the first node, and the second response message includes the identification information of the network element in which the first node is located or the address information of the first node; and
the type of the first node is the access network device, and the fourth node or the fifth node is an operations, administration and maintenance OAM;
the type of the first node is the core network element, and the fourth node or the fifth node is a network repository function NRF; or
the type of the first node is the application function node, and the fourth node or the fifth node is a network exposure function NEF.

In a possible implementation, the processing unit 902 is further configured to:
send a blockchain establishment result to the second node based on the first indication message from the at least one first node by using the transceiver unit 901.

In a possible implementation, when the blockchain establishment result is sent to the second node based on the first indication message from the at least one first node, the processing unit 902 is further configured to:
send the blockchain establishment result and a blockchain establishment log to the second node based on the first indication message from the at least one first node by using the transceiver unit 901, where
the blockchain establishment log includes a requirement completion status.

In a possible implementation, the first indication message includes configuration success information or configuration failure information, and the blockchain establishment result includes a blockchain establishment success or a blockchain establishment failure; and
when the blockchain establishment result is sent to the second node based on the first indication message from the at least one first node, the processing unit 902 is configured to:
send, by using the transceiver unit 901, the blockchain establishment result to the second node based on an amount of configuration success information included in the first indication message from the at least one first node.

In a possible implementation, if the amount of configuration success information is greater than or equal to a first quantity threshold, the blockchain establishment result is the blockchain establishment success; or
if the amount of configuration success information is less than a first quantity threshold, the blockchain establishment result is the blockchain establishment failure.

In a possible implementation, the processing unit 902 is further configured to:
if the amount of configuration success information is less than the first quantity threshold, reselect a node satisfying a blockchain establishment requirement, and configuring the node to be the blockchain node.

In a possible implementation, the transceiver unit 901 is further configured to:
receive blockchain capability information of a plurality of nodes, where the plurality of nodes include the at least one first node.

In a possible implementation, the apparatus further includes the storage unit 903.

After the blockchain capability information of the plurality of nodes is received, the storage unit 903 or the transceiver unit 901 is configured to:
the storage unit 903 is configured to store the blockchain capability information of the plurality of nodes; or
the transceiver unit 901 is configured to send the blockchain capability information of the plurality of nodes to a sixth node.

In a possible implementation, the blockchain capability information includes a mode supported by the node, and the mode includes one or more of the following:
a client mode, a micronode mode, a light-node mode, and a full-node mode, where
a node in the client mode is configured to generate a transaction or a transaction proposal;
a node in the micronode mode is configured to preprocess the transaction or the transaction proposal, where the preprocessing the transaction or the transaction proposal includes one or more of the following: verifying the transaction or the transaction proposal; executing the transaction proposal to generate the transaction; and generating a microblock based on the transaction;
a node in the light-node mode is configured to process the transaction, the transaction proposal, or the microblock, and the processing the transaction, the transaction proposal, or the microblock includes one or more of the following: verifying the transaction or the transaction proposal; executing the transaction proposal to generate the transaction; and reaching a consensus on the transaction or the microblock, and generating a complete block based on the transaction or the microblock; and
a node in the full-node mode includes a function of the node in the light-node mode, and is configured to store the complete block.

In a possible implementation, the node in the client mode and the node in the micronode mode include at least one of the following capabilities: a smart-contract deployment, invoking, or execution capability, a transaction reporting, querying, or execution capability, a block querying capability, a computing capability, a storage capability, a network capability, a security algorithm capability, and a trusted-execution-environment provision capability; and
the node in the light-node mode and the node in the full-node mode include at least one of the following capabilities: the smart-contract deployment, invoking, or execution capability, the transaction reporting, querying, or execution capability, the block querying capability, the computing capability, the storage capability, the network capability, the security algorithm capability, the trusted-execution-environment provision capability, and a consensus capability.

In a possible implementation, the blockchain capability information includes at least one of the following capabilities:
a smart-contract deployment, invoking, or execution capability, a transaction reporting, querying, or execution capability, a block querying capability, a computing capability, a storage capability, a network capability, a security algorithm capability, a trusted-execution-environment provision capability, and a consensus capability.

In a possible implementation, the transceiver unit 901 is further configured to:
send a second message to a third node, where the third node is a successfully configured node in the at least one first node, and the second message is for canceling the third node serving as the blockchain node; and
receive a second indication message from the third node, where the second indication message indicates whether the third node is successfully canceled.

In another implementation, the communication apparatus is a first node, may be an apparatus in the first node, or may be an apparatus that can be used together with the first node. For example, the first node may be specifically a terminal device, an access network device, a core network element, an independent node, an application function node, an edge network node, or the like. This is not limited herein. The communication apparatus may alternatively be a chip system.

The transceiver unit 901 is configured to receive a first message, where the first message is for configuring the first node to be a blockchain node, a type of the first node includes at least one of the following: a terminal device, an access network device, a core network element, an independent node, an application function node, and an edge network node, and the terminal device, the access network device, the core network element, the independent node, the application function node, and the edge network node are nodes having a blockchain capability in a communication network.

The transceiver unit 901 is configured to send a first indication message, where the first indication message indicates whether the first node is successfully configured.

In a possible implementation, the transceiver unit 901 is further configured to:
send blockchain capability information.

In a possible implementation, the blockchain capability information includes a mode supported by the node, and the mode includes one or more of the following:
a client mode, a micronode mode, a light-node mode, and a full-node mode, where
a node in the client mode is configured to generate a transaction or a transaction proposal;
a node in the micronode mode is configured to preprocess the transaction or the transaction proposal, where the preprocessing the transaction or the transaction proposal includes one or more of the following: verifying the transaction or the transaction proposal; executing the transaction proposal to generate the transaction; and generating a microblock based on the transaction;
a node in the light-node mode is configured to process the transaction, the transaction proposal, or the microblock, and the processing the transaction, the transaction proposal, or the microblock includes one or more of the following: verifying the transaction or the transaction proposal; executing the transaction proposal to generate the transaction; and reaching a consensus on the transaction or the microblock, and generating a complete block based on the transaction or the microblock; and
a node in the full-node mode includes a function of the node in the light-node mode, and is configured to store the complete block.

In a possible implementation, the node in the client mode and the node in the micronode mode include at least one of the following capabilities: a smart-contract deployment, invoking, or execution capability, a transaction reporting, querying, or execution capability, a block querying capability, a computing capability, a storage capability, a network capability, a security algorithm capability, and a trusted-execution-environment provision capability; and
the node in the light-node mode and the node in the full-node mode include at least one of the following capabilities: the smart-contract deployment, invoking, or execution capability, the transaction reporting, querying, or execution capability, the block querying capability, the computing capability, the storage capability, the network capability, the security algorithm capability, the trusted-execution-environment provision capability, and a consensus capability.

In a possible implementation, the blockchain capability information includes at least one of the following capabilities:
a smart-contract deployment, invoking, or execution capability, a transaction reporting, querying, or execution capability, a block querying capability, a computing capability, a storage capability, a network capability, a security algorithm capability, a trusted-execution-environment provision capability, and a consensus capability.

In a possible implementation, the first indication message indicates that the first node is successfully configured; and
the transceiver unit 901 is further configured to:
receive a second message, where the second message is for canceling the first node serving as the blockchain node; and
send a second indication message, where the second indication message indicates whether the first node is successfully canceled.

In another implementation, the communication apparatus is a second node, may be an apparatus in the second node, or may be an apparatus that can be used together with the second node. The communication apparatus may alternatively be a chip system.

The processing unit 902 is configured to determine blockchain establishment requirement information.

The transceiver unit 901 is configured to send the blockchain establishment requirement information.

In a possible implementation, the blockchain establishment requirement information includes one or more of the following requirements:
a blockchain structure, a block structure, a consensus mechanism, a throughput requirement, whether a blockchain supports an editing function, an access control policy for the blockchain, a quantity of first nodes, policy information, identification information of the first node, a capability of the first node, a type of the first node, a mode supported by the first node, configuration information corresponding to the first node, and whether the first node is capable of providing a trusted execution environment for running of the blockchain.

In a possible implementation, the type of the first node includes at least one of the following:
a terminal device, an access network device, a core network element, an independent node, an application function node, and an edge network node, where
the terminal device, the access network device, the core network element, the independent node, the application function node, and the edge network node are nodes having a blockchain capability in a communication network.

In a possible implementation, the transceiver unit 901 is further configured to:
receive a blockchain establishment result; or
receive a blockchain establishment result and a blockchain establishment log, where the blockchain establishment log includes a requirement completion status.

In a possible implementation, the blockchain establishment result includes a blockchain establishment success or a blockchain establishment failure.

In a possible implementation, the mode includes one or more of the following:
a client mode, a micronode mode, a light-node mode, and a full-node mode, where
a node in the client mode is configured to generate a transaction or a transaction proposal;
a node in the micronode mode is configured to preprocess the transaction or the transaction proposal, where the preprocessing the transaction or the transaction proposal includes one or more of the following: verifying the transaction or the transaction proposal; executing the transaction proposal to generate the transaction; and generating a microblock based on the transaction;
a node in the light-node mode is configured to process the transaction, the transaction proposal, or the microblock, and the processing the transaction, the transaction proposal, or the microblock includes one or more of the following: verifying the transaction or the transaction proposal; executing the transaction proposal to generate the transaction; and reaching a consensus on the transaction or the microblock, and generating a complete block based on the transaction or the microblock; and
a node in the full-node mode includes a function of the node in the light-node mode, and is configured to store the complete block.

In a possible implementation, the node in the client mode and the node in the micronode mode include at least one of the following capabilities: a smart-contract deployment, invoking, or execution capability, a transaction reporting, querying, or execution capability, a block querying capability, a computing capability, a storage capability, a network capability, a security algorithm capability, and a trusted-execution-environment provision capability; and
the node in the light-node mode and the node in the full-node mode include at least one of the following capabilities: the smart-contract deployment, invoking, or execution capability, the transaction reporting, querying, or execution capability, the block querying capability, the computing capability, the storage capability, the network capability, the security algorithm capability, the trusted-execution-environment provision capability, and a consensus capability.

In another implementation, the communication apparatus is the fourth node, may be an apparatus in the fourth node, or may be an apparatus that can be used together with the fourth node. For example, the fourth node may be specifically a core network element in 5G or a core network element newly defined in 6G. This is not limited herein. The communication apparatus may alternatively be a chip system.

The transceiver unit 901 is configured to receive a first query request, where the first query request includes policy information, or the first query request includes identification information of a first node.

The transceiver unit 901 is configured to send a first response message, where when the first query request includes the policy information, the first response message includes identification information of a network element in which the first node is located, address information of the first node, or the identification information of the first node; or when the first query request includes the identification information of the first node, the first response message includes identification information of a network element in which the first node is located or address information of the first node.

A type of the first node includes at least one of the following: a terminal device, an access network device, a core network element, an independent node, an application function node, and an edge network node, and the terminal device, the access network device, the core network element, the independent node, the application function node, and the edge network node are nodes having a blockchain capability in a communication network.

In a possible implementation, the network element in which the first node is located is an access and mobility management function AMF.

In a possible implementation, the type of the first node is the terminal device, the first query request includes the policy information, the first response message includes the identification information of the first node, and the fourth node is a policy control function PCF.

In a possible implementation, the type of the first node is the terminal device, the first query request includes the identification information of the first node, the first response message includes the identification information of the network element in which the first node is located or the address information of the first node, and the fourth node is a unified data management UDM.

In a possible implementation, the first response message includes the identification information of the network element in which the first node is located or the address information of the first node; and
the type of the first node is the access network device, and the fourth node is an operations, administration and maintenance OAM;
the type of the first node is the core network element, and the fourth node is a network repository function NRF; or
the type of the first node is the application function node, and the fourth node is a network exposure function NEF.

In a possible implementation, the apparatus further includes the storage unit 903.

The transceiver unit 901 is configured to receive blockchain capability information of a plurality of nodes, where the plurality of nodes include at least one first node, the type of the first node includes at least one of the following: the terminal device, the access network device, the core network element, the independent node, the application function node, and the edge network node, and the terminal device, the access network device, the core network element, the independent node, the application function node, and the edge network node are the nodes having a blockchain capability in the communication network.

The storage unit 903 is configured to store the blockchain capability information of the plurality of nodes, where the blockchain capability information is for a ledger anchor function to determine the at least one first node.

For another possible implementation of the communication apparatus, refer to the related descriptions of the function of the related device in the method embodiments corresponding to FIG. 4 to FIG. 6. Details are not described herein again.

FIG. 10 is a diagram of a structure of another communication apparatus according to an embodiment of this application. The communication apparatus includes a processor 1010 and an interface circuit 1020. The processor 1010 and the interface circuit 1020 are coupled to each other. It may be understood that the interface circuit 1020 may be a transceiver or an input/output interface. Optionally, the communication apparatus may further include a memory 1030, configured to store instructions executed by the processor 1010, input data needed by the processor 1010 to run the instructions, or data generated by running the instructions by the processor 1010.

When the communication apparatus is configured to implement the method in the foregoing method embodiment, the processor 1010 is configured to perform a function of the foregoing processing unit 902, and the interface circuit 1020 is configured to perform a function of the foregoing transceiver unit 901.

When the communication apparatus is a chip used in a LAF, the chip implements a function of the LAF in the foregoing method embodiment. The chip receives information from another network element (or an entity or a node), or the chip sends information to another network element (or an entity or a node).

When the communication apparatus is a chip used in a first node, the chip implements a function of the first node in the foregoing method embodiment. The chip receives information from another network element (or an entity or a node); or the first node chip sends information to another network element (or an entity).

When the communication apparatus is a chip used in a second node, the chip used in the second node implements a function of the second node in the foregoing method embodiment. The chip used in the second node receives information from another network element, or the chip used in the second node sends information to another network element (or an entity or a node).

When the communication apparatus is a chip used in a fourth node, the chip implements a function of the fourth node in the foregoing method embodiment. The chip receives information from another network element, or the chip sends information to another network element (or an entity or a node).

When the communication apparatus is a chip used in a fifth node, the chip implements a function of the fifth node in the foregoing method embodiment. The chip receives information from another network element, or the chip sends information to another network element (or an entity or a node).

When the communication apparatus is a chip used in a sixth node, the chip implements a function of the sixth node in the foregoing method embodiment. The chip receives information from another network element, or the chip sends information to another network element (or an entity or a node).

It may be understood that the processor in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA), another programmable logic device, a transistor logic device, a hardware component, or any combination thereof. The genera-purpose processor may be a microprocessor or any regular processor.

The method steps in embodiments of this application may be implemented by using hardware, or may be implemented by the processor executing software instructions. The software instructions may include a corresponding software module. The software module may be stored in a random access memory (random access memory, RAM), a flash memory, a read-only memory (Read-Only Memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium, and can write information to the storage medium. Certainly, the storage medium may alternatively be a component of the processor. The processor and the storage medium may be disposed in an ASIC. In addition, the ASIC may be located in the LAF, the first node, the second node, the fourth node, the fifth node, or the sixth node. Certainly, the processor and the storage medium may alternatively exist as discrete components in the LAF, the first node, the second node, the fourth node, the fifth node, or the sixth node.

All or some of the foregoing embodiments may be implemented by using software, hardware, firmware, or any combination thereof. When the software is used to implement embodiments, all or some of embodiments may be implemented in a form of a computer program product. The computer program product includes one or more computer programs or instructions. When the computer programs or the instructions are loaded and executed on a computer, the procedures or functions according to embodiments of this application are all or partially generated. The computer may be a general-purpose computer, a dedicated computer, a computer network, or another programmable apparatus. The computer programs or the instructions may be stored in a computer-readable storage medium, or may be communicated by using the computer-readable storage medium. The computer-readable storage medium may be any usable medium accessible by the computer, or a data storage device, for example, a server, integrating one or more usable media. The usable medium may be a magnetic medium, for example, a floppy disk, a hard disk, or a magnetic tape; may be an optical medium, for example, a digital versatile disc (digital versatile disc, DVD); or may be a semiconductor medium, for example, a solid-state drive (solid-state drive, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are used for differentiation merely for ease of description, but are not for limiting the scope of embodiments of this application. Sequence numbers of the foregoing processes do not mean an execution sequence, and the execution sequence of the processes should be determined based on functions and internal logic of the processes.

An embodiment of this application further provides a computer-readable storage medium. The computer-readable storage medium stores computer-executable instructions. When the computer-executable instructions are executed, the method performed by the LAF, the first node, the second node, the fourth node, the fifth node, or the sixth node in the foregoing method embodiment is enabled to be implemented.

An embodiment of this application further provides a computer program product. The computer program product includes a computer program. When the computer program is executed, the method performed by the LAF, the first node, the second node, the fourth node, the fifth node, or the sixth node in the foregoing method embodiment is enabled to be implemented.

An embodiment of this application further provides a communication system. The communication system includes a LAF or one or more nodes in a first node, a second node, a fourth node, a fifth node, a sixth node, or the like. The LAF is configured to perform the method performed by the LAF in the foregoing method embodiment. The first node is configured to perform the method performed by the first node in the foregoing method embodiment. The second node is configured to perform the method performed by the second node in the foregoing method embodiment. The fourth node is configured to perform the method performed by the fourth node in the foregoing method embodiment. The fifth node is configured to perform the method performed by the fifth node in the foregoing method embodiment. The sixth node is configured to perform the method performed by the sixth node in the foregoing method embodiment.

It should be noted that, for brief description, the foregoing method embodiments are all expressed as a series of actions. However, persons skilled in the art should appreciate that this application is not limited to the order of the actions, because according to this application, some steps may be performed in other orders or simultaneously. Persons skilled in the art should also know that embodiments described in this specification are all example embodiments, and the related actions and modules are not necessarily needed by this application.

Descriptions of embodiments provided in this application may refer to each other, and the descriptions of embodiments have respective focuses. For a part that is not described in detail in an embodiment, refer to related descriptions in another embodiment. For ease of description and brevity, for example, for functions of the apparatuses and devices provided in embodiments of this application and performed steps, refer to the related descriptions in the method embodiments of this application. The method embodiments and the apparatus embodiments may also be mutually referenced, combined, or cited.

Finally, it should be noted that the foregoing embodiments are merely for describing the technical solutions in this application but not for limiting this application. Although this application is described in detail with reference to the foregoing embodiments, persons of ordinary skill in the art should understand that they may still make modifications to the technical solutions recorded in the foregoing embodiments or make equivalent replacements to some or all technical features thereof, and these modifications or replacements do not make essence of the corresponding technical solutions depart from the scope of the technical solutions in embodiments of this application.

## Claims

1. A blockchain creation method, wherein the method is applied to a ledger anchor function LAF, and comprises:
sending a first message to at least one first node, wherein the first message is for configuring the first node to be a blockchain node, a type of the first node comprises at least one of the following: a terminal device, an access network device, a core network element, an independent node, an application function node, and an edge network node, and the terminal device, the access network device, the core network element, the independent node, the application function node, and the edge network node are nodes having a blockchain capability in a communication network; and
receiving a first indication message from the at least one first node, wherein the first indication message indicates whether the first node is successfully configured.

2. The method according to claim 1, wherein the method further comprises:
receiving blockchain establishment requirement information from a second node; and
the sending a first message to at least one first node comprises:
sending the first message to the at least one first node based on the blockchain establishment requirement information.

3. The method according to claim 2, wherein the blockchain establishment requirement information comprises one or more of the following requirements:
a blockchain structure, a block structure, a consensus mechanism, a throughput requirement, whether a blockchain supports an editing function, an access control policy for the blockchain, a quantity of first nodes, policy information, identification information of the first node, a capability of the first node, the type of the first node, a mode supported by the first node, configuration information corresponding to the first node, and whether the first node is capable of providing a trusted execution environment for running of the blockchain.

4. The method according to claim 3, wherein the blockchain establishment requirement information comprises the policy information; and
the sending the first message to the at least one first node based on the blockchain establishment requirement information comprises:
obtaining identification information of a network element in which the first node is located, address information of the first node, or identification information of the first node based on the policy information; and
sending the first message to the at least one first node based on the identification information of the network element in which the first node is located, the address information of the first node, or the identification information of the first node.

5. The method according to claim 4, wherein the obtaining identification information of a network element in which the first node is located, address information of the first node, or identification information of the first node based on the policy information comprises:
sending a first query request to a fourth node, wherein the first query request comprises the policy information; and
receiving a first response message from the fourth node, wherein the first response message comprises the identification information of the network element in which the first node is located, the address information of the first node, or the identification information of the first node.

6. The method according to claim 3, wherein the blockchain establishment requirement information comprises the identification information of the first node; and
the sending the first message to the at least one first node based on the blockchain establishment requirement information comprises:
sending the first message to the at least one first node based on the identification information of the first node.

7. The method according to claim 4 or 6, wherein the sending the first message to the at least one first node based on the identification information of the first node comprises:
obtaining the identification information of the network element in which the first node is located or the address information of the first node based on the identification information of the first node; and
sending the first message to the at least one first node based on the identification information of the network element in which the first node is located or the address information of the first node.

8. The method according to claim 7, wherein the obtaining the identification information of the network element in which the first node is located or the address information of the first node based on the identification information of the first node comprises:
sending a second query request to a fifth node, wherein the second query request comprises the identification information of the first node; and
receiving a second response message from the fifth node, wherein the second response message comprises the identification information of the network element in which the first node is located or the address information of the first node.

9. The method according to claim 4, 5, 7 or 8, wherein the network element in which the first node is located is an access and mobility management function AMF.

10. The method according to claim 5 or 8, wherein the type of the first node is the terminal device; and the first response message comprises the identification information of the first node, or the second response message comprises the identification information of the network element in which the first node is located or the address information of the first node; and
the fourth node is a policy control function PCF, or the fifth node is a unified data management UDM.

11. The method according to claim 5 or 8, wherein the first response message comprises the identification information of the network element in which the first node is located or the address information of the first node, and the second response message comprises the identification information of the network element in which the first node is located or the address information of the first node; and
the type of the first node is the access network device, and the fourth node or the fifth node is an operations, administration and maintenance OAM;
the type of the first node is the core network element, and the fourth node or the fifth node is a network repository function NRF; or
the type of the first node is the application function node, and the fourth node or the fifth node is a network exposure function NEF.

12. The method according to any one of claims 2 to 11, wherein the method further comprises:
sending a blockchain establishment result to the second node based on the first indication message from the at least one first node.

13. The method according to claim 12, wherein the sending a blockchain establishment result to the second node based on the first indication message from the at least one first node comprises:
sending the blockchain establishment result and a blockchain establishment log to the second node based on the first indication message from the at least one first node, wherein
the blockchain establishment log comprises a requirement completion status.

14. The method according to claim 12 or 13, wherein the first indication message comprises configuration success information or configuration failure information, and the blockchain establishment result comprises a blockchain establishment success or a blockchain establishment failure; and
the sending a blockchain establishment result to the second node based on the first indication message from the at least one first node comprises:
sending the blockchain establishment result to the second node based on an amount of configuration success information comprised in the first indication message from the at least one first node.

15. The method according to claim 14, wherein
if the amount of configuration success information is greater than or equal to a first quantity threshold, the blockchain establishment result is the blockchain establishment success; or
if the amount of configuration success information is less than a first quantity threshold, the blockchain establishment result is the blockchain establishment failure.

16. The method according to any one of claims 1 to 15, wherein the method further comprises:
receiving blockchain capability information of a plurality of nodes, wherein the plurality of nodes comprise the at least one first node.

17. The method according to claim 16, wherein the method further comprises:
storing the blockchain capability information of the plurality of nodes; or
sending the blockchain capability information of the plurality of nodes to a sixth node.

18. The method according to claim 16 or 17, wherein the blockchain capability information comprises a mode supported by the node, and the mode comprises one or more of the following:
a client mode, a micronode mode, a light-node mode, and a full-node mode, wherein
a node in the client mode is configured to generate a transaction or a transaction proposal;
a node in the micronode mode is configured to preprocess the transaction or the transaction proposal, wherein the preprocessing the transaction or the transaction proposal comprises one or more of the following: verifying the transaction or the transaction proposal; executing the transaction proposal to generate the transaction; and generating a microblock based on the transaction;
a node in the light-node mode is configured to process the transaction, the transaction proposal, or the microblock, and the processing the transaction, the transaction proposal, or the microblock comprises one or more of the following: verifying the transaction or the transaction proposal; executing the transaction proposal to generate the transaction; and reaching a consensus on the transaction or the microblock, and generating a complete block based on the transaction or the microblock; and
a node in the full-node mode comprises a function of the node in the light-node mode, and is configured to store the complete block.

19. The method according to claim 18, wherein
the node in the client mode and the node in the micronode mode comprise at least one of the following capabilities: a smart-contract deployment, invoking, or execution capability, a transaction reporting, querying, or execution capability, a block querying capability, a computing capability, a storage capability, a network capability, a security algorithm capability, and a trusted-execution-environment provision capability; and
the node in the light-node mode and the node in the full-node mode comprise at least one of the following capabilities: the smart-contract deployment, invoking, or execution capability, the transaction reporting, querying, or execution capability, the block querying capability, the computing capability, the storage capability, the network capability, the security algorithm capability, the trusted-execution-environment provision capability, and a consensus capability.

20. The method according to claim 16 or 17, wherein the blockchain capability information comprises at least one of the following capabilities:
a smart-contract deployment, invoking, or execution capability, a transaction reporting, querying, or execution capability, a block querying capability, a computing capability, a storage capability, a network capability, a security algorithm capability, a trusted-execution-environment provision capability, and a consensus capability.

21. The method according to any one of claims 1 to 20, wherein the method further comprises:
sending a second message to a third node, wherein the third node is a successfully configured node in the at least one first node, and the second message is for canceling the third node serving as the blockchain node; and
receiving a second indication message from the third node, wherein the second indication message indicates whether the third node is successfully canceled.

22. A blockchain creation method, comprising:
receiving, by a first node, a first message, wherein the first message is for configuring the first node to be a blockchain node, a type of the first node comprises at least one of the following: a terminal device, an access network device, a core network element, an independent node, an application function node, and an edge network node, and the terminal device, the access network device, the core network element, the independent node, the application function node, and the edge network node are nodes having a blockchain capability in a communication network; and
sending, by the first node, a first indication message, wherein the first indication message indicates whether the first node is successfully configured.

23. The method according to claim 22, wherein the method further comprises:
sending, by the first node, blockchain capability information.

24. The method according to claim 23, wherein the blockchain capability information comprises a mode supported by the node, and the mode comprises one or more of the following:
a client mode, a micronode mode, a light-node mode, and a full-node mode, wherein
a node in the client mode is configured to generate a transaction or a transaction proposal;
a node in the micronode mode is configured to preprocess the transaction or the transaction proposal, wherein the preprocessing the transaction or the transaction proposal comprises one or more of the following: verifying the transaction or the transaction proposal; executing the transaction proposal to generate the transaction; and generating a microblock based on the transaction;
a node in the light-node mode is configured to process the transaction, the transaction proposal, or the microblock, and the processing the transaction, the transaction proposal, or the microblock comprises one or more of the following: verifying the transaction or the transaction proposal; executing the transaction proposal to generate the transaction; and reaching a consensus on the transaction or the microblock, and generating a complete block based on the transaction or the microblock; and
a node in the full-node mode comprises a function of the node in the light-node mode, and is configured to store the complete block.

25. The method according to claim 24, wherein
the node in the client mode and the node in the micronode mode comprise at least one of the following capabilities: a smart-contract deployment, invoking, or execution capability, a transaction reporting, querying, or execution capability, a block querying capability, a computing capability, a storage capability, a network capability, a security algorithm capability, and a trusted-execution-environment provision capability; and
the node in the light-node mode and the node in the full-node mode comprise at least one of the following capabilities: the smart-contract deployment, invoking, or execution capability, the transaction reporting, querying, or execution capability, the block querying capability, the computing capability, the storage capability, the network capability, the security algorithm capability, the trusted-execution-environment provision capability, and a consensus capability.

26. The method according to claim 23, wherein the blockchain capability information comprises at least one of the following capabilities:
a smart-contract deployment, invoking, or execution capability, a transaction reporting, querying, or execution capability, a block querying capability, a computing capability, a storage capability, a network capability, a security algorithm capability, a trusted-execution-environment provision capability, and a consensus capability.

27. The method according to any one of claims 21 to 26, wherein the first indication message indicates that the first node is successfully configured; and
the method further comprises:
receiving a second message, wherein the second message is for canceling the first node serving as the blockchain node; and
sending a second indication message, wherein the second indication message indicates whether the first node is successfully canceled.

28. A communication apparatus, comprising a unit or a module configured to perform the method according to any one of claims 1 to 21, or comprising a unit or a module configured to perform the method according to any one of claims 22 to 27.

29. A communication apparatus, comprising:
one or more processors, one or more transceivers, and one or more memories, wherein
the one or more memories are configured to store a computer program, and the one or more processors and the one or more transceivers are configured to execute the computer program stored in the one or more memories, to enable the communication apparatus to perform the method according to any one of claims 1 to 21 or claims 22 to 27.

30. A computer-readable storage medium, wherein the storage medium stores a computer program or instructions; and when the computer program or the instructions are executed by a computer, the method according to any one of claims 1 to 21 or claims 22 to 27 is implemented.

31. A computer program product, comprising computer program code, wherein when the computer program code is run on a computer, the method according to any one of claims 1 to 21 or claims 22 to 27 is implemented.

32. A communication system, wherein the communication system comprises a ledger anchor function LAF and at least one first node, wherein
the LAF is configured to send a first message to the at least one first node, wherein the first message is for configuring the first node to be a blockchain node, a type of the first node comprises at least one of the following: a terminal device, an access network device, a core network element, an independent node, an application function node, and an edge network node, and the terminal device, the access network device, the core network element, the independent node, the application function node, and the edge network node are nodes having a blockchain capability in a communication network; and
the at least one first node is configured to send a first indication message to the LAF, wherein the first indication message indicates whether the first node for sending the first indication information is successfully configured.

33. The communication system according to claim 32, wherein the communication system further comprises a second node, wherein
the second node is configured to send blockchain establishment requirement information to the LAF; and
that the LAF is configured to send a first message to the at least one first node comprises:
the LAF is configured to send the first message to the at least one first node based on the blockchain establishment requirement information.

34. The communication system according to claim 33, wherein the blockchain establishment requirement information comprises one or more of the following requirements:
a blockchain structure, a block structure, a consensus mechanism, a throughput requirement, whether a blockchain supports an editing function, an access control policy for the blockchain, a quantity of first nodes, policy information, identification information of the first node, a capability of the first node, the type of the first node, a mode supported by the first node, configuration information corresponding to the first node, and whether the first node is capable of providing a trusted execution environment for running of the blockchain.

35. The communication system according to claim 34, wherein the blockchain establishment requirement information comprises the policy information or the identification information of the first node, and the communication system further comprises a fourth node; and
that the LAF is configured to send the first message to the at least one first node based on the blockchain establishment requirement information comprises:
the LAF is configured to send a first query request to the fourth node, wherein the first query request comprises the policy information, or the first query request comprises the identification information of the first node;
the fourth node is configured to send a first response message to the LAF, wherein when the first query request comprises the policy information, the first response message comprises identification information of a network element in which the first node is located, address information of the first node, or the identification information of the first node; or when the first query request comprises the identification information of the first node, the first response message comprises identification information of a network element in which the first node is located or address information of the first node; and
the LAF is configured to send the first message to the at least one first node based on the identification information of the network element in which the first node is located, the address information of the first node, or the identification information of the first node.

36. The communication system according to claim 35, wherein the network element in which the first node is located is an access and mobility management function AMF.

37. The communication system according to claim 35 or 36, wherein the type of the first node is the terminal device, the first query request comprises the policy information, the first response message comprises the identification information of the first node, and the fourth node is a policy control function PCF.

38. The communication system according to claim 35 or 36, wherein the type of the first node is the terminal device, the first query request comprises the identification information of the first node, the first response message comprises the identification information of the network element in which the first node is located or the address information of the first node, and the fourth node is a unified data management UDM.

39. The communication system according to claim 35, wherein the first response message comprises the identification information of the network element in which the first node is located or the address information of the first node; and
the type of the first node is the access network device, and the fourth node is an operations, administration and maintenance OAM;
the type of the first node is the core network element, and the fourth node is a network repository function NRF; or
the type of the first node is the application function node, and the fourth node is a network exposure function NEF.

40. The communication system according to any one of claims 33 to 39, wherein
the LAF is configured to send a blockchain establishment result to the second node based on the first indication message from the at least one first node; or
the LAF is configured to send a blockchain establishment result and a blockchain establishment log to the second node based on the first indication message from the at least one first node, wherein the blockchain establishment log comprises a requirement completion status.

41. The communication system according to claim 40, wherein the first indication message comprises configuration success information or configuration failure information, and the blockchain establishment result comprises a blockchain establishment success or a blockchain establishment failure; and
that the LAF is configured to send a blockchain establishment result to the second node based on the first indication message from the at least one first node comprises:
the LAF is configured to send the blockchain establishment result to the second node based on an amount of configuration success information comprised in the first indication message from the at least one first node.

42. The communication system according to claim 41, wherein if the amount of configuration success information is greater than or equal to a first quantity threshold, the blockchain establishment result is the blockchain establishment success; or
if the amount of configuration success information is less than a first quantity threshold, the blockchain establishment result is the blockchain establishment failure.

43. The communication system according to any one of claims 32 to 42, wherein the at least one first node is further configured to:
send blockchain capability information to the LAF.

44. The communication system according to claim 43, wherein
the LAF is further configured to store the blockchain capability information; or
the LAF is further configured to send the blockchain capability information to the fourth node; and
the fourth node stores the blockchain capability information.

45. The communication system according to claim 43 or 44, wherein the blockchain capability information comprises a mode supported by the node, and the mode comprises one or more of the following:
a client mode, a micronode mode, a light-node mode, and a full-node mode, wherein
a node in the client mode is configured to generate a transaction or a transaction proposal;
a node in the micronode mode is configured to preprocess the transaction or the transaction proposal, wherein the preprocessing the transaction or the transaction proposal comprises one or more of the following: verifying the transaction or the transaction proposal; executing the transaction proposal to generate the transaction; and generating a microblock based on the transaction;
a node in the light-node mode is configured to process the transaction, the transaction proposal, or the microblock, and the processing the transaction, the transaction proposal, or the microblock comprises one or more of the following: verifying the transaction or the transaction proposal; executing the transaction proposal to generate the transaction; and reaching a consensus on the transaction or the microblock, and generating a complete block based on the transaction or the microblock; and
a node in the full-node mode comprises a function of the node in the light-node mode, and is configured to store the complete block.

46. The communication system according to claim 45, wherein the node in the client mode and the node in the micronode mode comprise at least one of the following capabilities: a smart-contract deployment, invoking, or execution capability, a transaction reporting, querying, or execution capability, a block querying capability, a computing capability, a storage capability, a network capability, a security algorithm capability, and a trusted-execution-environment provision capability; and
the node in the light-node mode and the node in the full-node mode comprise at least one of the following capabilities: the smart-contract deployment, invoking, or execution capability, the transaction reporting, querying, or execution capability, the block querying capability, the computing capability, the storage capability, the network capability, the security algorithm capability, the trusted-execution-environment provision capability, and a consensus capability.

47. The communication system according to claim 43 or 44, wherein the blockchain capability information comprises at least one of the following capabilities:
a smart-contract deployment, invoking, or execution capability, a transaction reporting, querying, or execution capability, a block querying capability, a computing capability, a storage capability, a network capability, a security algorithm capability, a trusted-execution-environment provision capability, and a consensus capability.

48. The communication system according to any one of claims 32 to 47, wherein
the LAF is configured to send a second message to a third node, wherein the third node is a successfully configured node in the at least one first node, and the second message is for canceling the third node serving as the blockchain node; and
the third node is configured to send a second indication message to the LAF, wherein the second indication message indicates whether the third node is successfully canceled.
